(19) Europäisches Patentamt
European Patent Office
Office européen des brevets

(11) **EP 4 564 954 A1**

(12) **EUROPEAN PATENT APPLICATION**
published in accordance with Art. 153(4) EPC

(43) Date of publication:
**04.06.2025 Bulletin 2025/23**

(21) Application number: **22952428.5**

(22) Date of filing: **28.07.2022**

(51) International Patent Classification (IPC):
**H04W 72/04** (2023.01)    **H04W 4/70** (2018.01)
**H04W 84/12** (2009.01)

(52) Cooperative Patent Classification (CPC):
**H04W 4/70; H04W 72/04; H04W 84/12**

(86) International application number:
**PCT/CN2022/108759**

(87) International publication number:
**WO 2024/020971 (01.02.2024 Gazette 2024/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Yapu
  Dongguan, Guangdong 523860 (CN)**
• **HUANG, Lei
  049483 (SG)**

(74) Representative: **Novagraaf Technologies
Bâtiment O2
2, rue Sarah Bernhardt
CS90017
92665 Asnières-sur-Seine Cedex (FR)**

(54) **COMMUNICATION METHOD AND STATION**

(57)    The present application relates to the field of communications, and in particular, to a communication method and a station. The communication method comprises: a station obtains first information, wherein the first information is used for indicating bandwidth-related information of a first channel. According to embodiments of the present application, the communication bandwidth can be expanded, so that the throughput of a communication device is improved.

300

> Acquiring, by a station, first information, wherein the first information indicates bandwidth-related information of a first channel — S310

FIG. 3

EP 4 564 954 A1

**Description**

**TECHNICAL FIELD**

Embodiments of the present disclosure relate to the field of communications, and in particular, relate to a communication method and a station.

**BACKGROUND**

With the developments of augmented reality (AR), virtual reality (VR), mixed reality (MR), and Internet of things, it is probable that a large number of wireless communication devices, for example, wireless fidelity (Wi-Fi) devices, need to access the network. A maximum channel bandwidth supported by a current communication system is unable to meet a high throughout demand from a large number of devices.

**SUMMARY**

Embodiments of the present disclosure provide a communication method. The method includes:
acquiring, by a station, first information, wherein the first information indicates bandwidth-related information of a first channel.

Embodiments of the present disclosure further provide a station. The station includes:
a processing unit, configured to acquire first information, wherein the first information indicates bandwidth-related information of a first channel.

Embodiments of the present disclosure further provide a communication device. The communication device includes: a processor and a memory storing one or more computer programs, wherein the one or more computer programs, when called, loaded, and run by the processor, cause the communication device to perform the method described above.

Embodiments of the present disclosure further provide a chip configured to perform the above communication method.

Specifically, the chip includes: a processor, wherein the processor, when calling one or more computer programs from a memory, and loading and running the one or more computer programs, causes a device equipped with the chip to perform the method described above.

Embodiments of the present disclosure further provide a computer-readable storage medium. The computer-readable storage medium stores one or more computer programs therein, wherein the one or more computer programs, when loaded and run by a device, cause the device to perform the method described above.

Embodiments of the present disclosure further provide a computer program product. The computer program product includes: one or more computer program instructions, wherein the one or more computer program instructions cause a computer to perform the method described above.

Embodiments of the present disclosure further provide a computer program. The computer program, when loaded and run one a computer, causes the computer to perform the method described above.

In the embodiments of the present disclosure, the communication bandwidth is extended, thereby improving the throughput of communication devices.

**BRIEF DESCRIPTION OF DRAWINGS**

FIG. 1 is a schematic diagram of an application scenario according to some embodiments of the present disclosure;
FIG. 2 is a schematic diagram of a primary channel and a secondary channel in a 320 MHz basic service set (BSS) according to some embodiments of the present disclosure;
FIG. 3 is a schematic flowchart of a communication method according to some embodiments of the present disclosure;
FIG. 4 is a schematic block diagram of a station according to some embodiments of the present disclosure;
FIG. 5 is a schematic diagram of a 240 MHz channel constructed within a 5 GHz frequency band according to some embodiments of the present disclosure;
FIG. 6 is a schematic diagram of a primary channel and a secondary channel in a 240 MHz BSS according to some embodiments of the present disclosure;
FIG. 7 is a schematic diagram of a primary channel and a secondary channel in a 240 MHz BSS according to some embodiments of the present disclosure;
FIG. 8 is a schematic diagram of a 480 MHz channel constructed within a 6 GHz frequency band according to some embodiments of the present disclosure;

FIG. 9 is a schematic diagram of a primary channel and a secondary channel in a 480 MHz BSS according to some embodiments of the present disclosure;

FIG. 10 is a schematic diagram of a 640 MHz channel constructed within a 6 GHz frequency band according to some embodiments of the present disclosure;

FIG. 11 is a schematic diagram of a primary channel and a secondary channel in a 640 MHz BSS according to some embodiments of the present disclosure;

FIG. 12 is a schematic diagram of a format of an Ultra-high Reliability (UHR) Capabilities element according to some embodiments of the present disclosure;

FIG. 13 is a schematic diagram of a format of a UHR Operation element according to some embodiments of the present disclosure;

FIG. 14 is a schematic diagram of a format of a UHR Operation Element subfield according to some embodiments of the present disclosure;

FIG. 15 is a schematic diagram of a format of a UHR Operation Element subfield according to some embodiments of the present disclosure;

FIG. 16 is a schematic structural diagram of a communication device according to some embodiments of the present disclosure;

FIG. 17 is a schematic block diagram of a chip according to some embodiments of the present disclosure; and

FIG. 18 is a schematic block diagram of a communication system according to some embodiments of the present disclosure.

## DETAILED DESCRIPTION

Technical solutions according to the embodiments of the present disclosure are described hereinafter in conjunction with the accompanying drawings.

The technical solutions according to the embodiments of the present disclosure are applicable to various communication systems, for example, a wireless local area network (WLAN), Wi-Fi, or other communication systems.

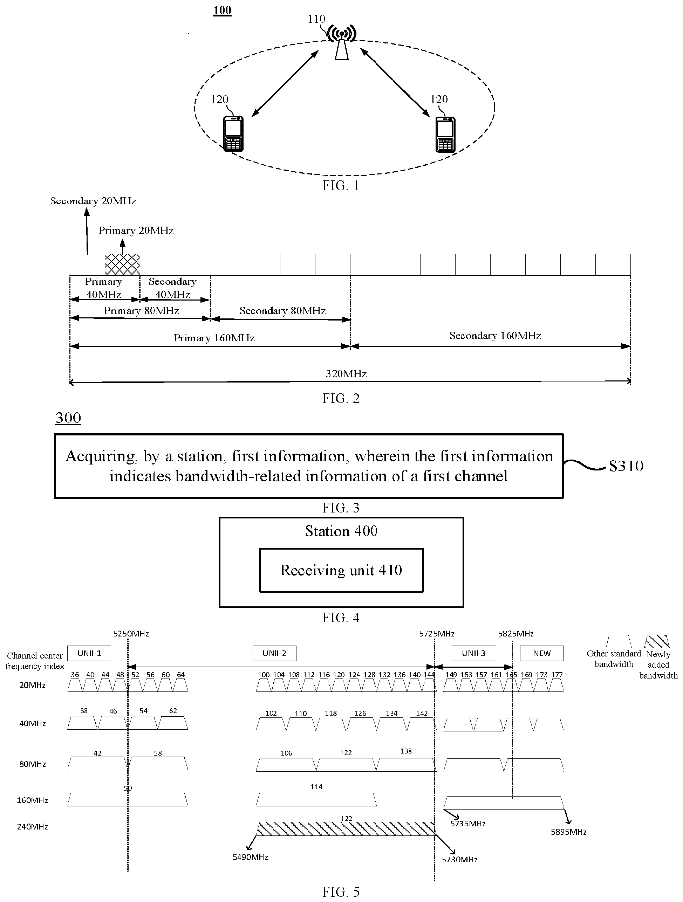

Illustratively, a communication system 100 according to the embodiments of the present disclosure is shown in FIG. 1. The communication system 100 includes an access point (AP) 110 and a station (STA) 120 accessing the network over the AP 110.

In some scenarios, the AP is also referred to as an AP STA. That is, the AP is a STA in some way.

In some scenarios, the STA is also referred to as a non-AP STA.

Communications in the communication system 100 include communication between the AP and the non-AP STA, communication between the non-AP STAs, or communication between the STA and a peer STA. The peer STA indicates a device in peer communication with the STA. For example, the peer STA is an AP or a non-AP STA.

The AP acts as a bridge to connect the wired network to the wireless network, and mainly functions to connect various wireless network clients and access the wireless network to the Ethernet. The AP device is a terminal device (for example, a mobile phone) or a network device (for example, a router). The terminal device or the network device includes a chip implementing the communication function, for example, the WLAN or the Wi-Fi chip.

It should be noted that the function of the STA in the communication system is not definite or specific. For example, in some scenarios, the mobile phone serves as the non-AP STA in the case that the mobile phone is connected to the router, and the mobile phone serves as the AP in the case that the mobile phone is the hotspot of other mobile phones.

The AP and the non-AP STA are devices applicable to the Internet of vehicles, Internet of things (IoT) nodes or sensors in the IoT, and smart cameras, smart remote controls, smart water meters and the like in the smart home, sensors in the smart city, and the like.

In some embodiments, the non-AP STA supports an 802.11be format. In some embodiments, the non-AP STA also supports various current and future WLAN formats of the 802.11 family, such as an 802.11 ax format, an 802.11 ac format, an 802.11n format, an 802.11g format, an 802.11b format, an 802.11a format, and the like.

In some embodiments, the AP is a device supporting the 802.11be format. The AP is also a device supporting various current and future WLAN formats of the 802.11 family, such as an 802.11 ax format, an 802.11 ac format, an 802.11n format, an 802.11g format, an 802.11b format, an 802.11a format, and the like.

In some embodiments, the STA is a mobile phone, a pad, a computer, a VR device, an AR device, an industrial control wireless device, a set-top box, a wireless device in self-driving, an in-vehicle communication device, a wireless device in remote medical surgery, a wireless device in smart grid, a wireless device in transportation safety, a wireless device in a smart city or smart home, a wireless communication chip/application-specific integrated circuit (ASIC)/system on chip (SoC), and the like that support the WLAN/Wi-Fi technologies.

The WLAN supports frequency bands including, but not limited to a low frequency band (2.4 GHz, 5 GHz, or 6 GHz), and a high frequency band (45 GHz and 60 GHz).

FIG. 1 illustrates an AP STA and two non-AP STAs. In some embodiments, the communication system 100 includes a plurality of AP STAs and another number of non-AP STAs, which is not limited in the embodiments of the present disclosure.

It should be noted that the terms "system" and "network" herein are exchangeable. The term "and/or" herein only describes associations between associated objects, and indicates three types of relationships. For example, the phrase "A and/or B" means (A), (B), or (A and B). The symbol "/" generally indicates an "or" relationship between the associated objects.

It should be understood that the term "indication" in the embodiments of the present disclosure refers to direct or indirect indication, or an associated relationship. Illustratively, in the case that A indicates B, it means that: A directly indicates B, for example, B can be acquired through A; A indirectly indicates B, for example, A indicates C, and B can be acquired through C; or A and B have an association relationship.

In some embodiments of the present disclosure, the term "correspondence" means direct correspondence or indirect correspondence between the two objects, association between the two objects, or a relationship of indicating and being indicated, configuring and being configured, or the like.

For convenient understanding of the technical solutions according to the embodiments of the present disclosure, the relevant technologies of the embodiments of the present disclosure are described hereinafter. The following relevant technologies can be arbitrarily combined with the technical solutions according to the embodiments of the present disclosure as alternative solutions, which fall within the scope of the protection of the embodiments of the present disclosure.

Primary channels and secondary channels

A maximum bandwidth of the current Wi-Fi channel is 320 MHz. The primary channel and the secondary channel include the following examples.

A primary 20 MHz channel is a 20 MHz channel configured to transmit a 20 MHz physical layer (PHY) physical layer protocol data unit (PPDU) in a 40 MHz, 80 MHz, 160 MHz, or 320 MHz BSS; or is a 20 MHz channel configured to transmit the beacon in a 40 MHz, 80 MHz, 160 MHz, or 320 MHz BSS.

A primary 40 MHz channel is a 40 MHz channel configured to transmit a 40 MHz PHY PPDU in an 80 MHz, 160 MHz, or 320 MHz BSS; or is a 40 MHz channel including the primary 20 MHz channel in an 80 MHz, 160 MHz, or 320 MHz BSS.

A primary 80 MHz channel is an 80 MHz channel configured to transmit an 80 MHz PHY PPDU in a 160 MHz or 320 MHz BSS; or is an 80 MHz channel including the primary 20 MHz channel in a 160 MHz or 320 MHz BSS.

A primary 160 MHz channel is a 160 MHz channel configured to transmit a 160 MHz PHY PPDU in a 320 MHz BSS; or is a 160 MHz channel including the primary 20 MHz channel in a 320 MHz BSS.

A secondary 20 MHz channel is a 20 MHz channel adjacent to the primary 20 MHz channel and forming a 40 MHz channel in a 40 MHz BSS with the primary 20 MHz channel in a 40 MHz BSS, a 20 MHz channel adjacent to the primary 20 MHz channel and forming a primary 40 MHz channel in an 80 MHz BSS with the primary 20 MHz channel in an 80 MHz BSS, a 20 MHz channel adjacent to the primary 20 MHz channel and forming a primary 40 MHz channel in a 160 MHz BSS with the primary 20 MHz channel in a 160 MHz BSS, or a 20 MHz channel adjacent to the primary 20 MHz channel and forming a primary 40 MHz channel in a 320 MHz BSS with the primary 20 MHz channel in a 320 MHz BSS.

A secondary 40 MHz channel is a 40 MHz channel adjacent to the primary 40 MHz channel and forming an 80 MHz channel in an 80 MHz BSS with the primary 40 MHz channel in an 80 MHz BSS, a 40 MHz channel adjacent to the primary 40 MHz channel and forming a primary 80 MHz channel in a 160 MHz BSS with the primary 40 MHz channel in a 160 MHz BSS, or a 40 MHz channel adjacent to the primary 40 MHz channel and forming a primary 80 MHz channel in a 320 MHz BSS with the primary 40 MHz channel in a 320 MHz BSS.

A secondary 80 MHz channel is an 80 MHz channel adjacent to the primary 80 MHz channel and forming a 160 MHz channel in a 160 MHz BSS with the primary 80 MHz channel in a 160 MHz BSS, or an 80 MHz channel adjacent to the primary 80 MHz channel and forming a primary 160 MHz channel in a 320 MHz BSS with the primary 80 MHz channel in a 320 MHz BSS.

A secondary 160 MHz channel is a 160 MHz channel adjacent to the primary 160 MHz channel and forming a 320 MHz channel in a 320 MHz BSS with the primary 160 MHz channel in a 320 MHz BSS. FIG. 2 is a schematic diagram of a primary channel and a secondary channel in a 320 MHz BSS.

FIG. 3 is a schematic flowchart of a communication method 300 according to some embodiments of the present disclosure. The method is applicable to the system shown in FIG. 1, but is not limited to this. The method includes at least the following process.

In S310, a station acquires first information, wherein the first information indicates bandwidth-related information of a first channel.

In the embodiments of the present disclosure, the station is an AP STA, or a non-AP STA. The method for acquiring the first information by the station includes acquiring the first information by organizing transmission resources of the communication system, or includes receiving the first information from another device, for example, another station. For example, the non-AP STA receives the first station from the AP STA. Similarly, the AP STA receives the first station from the non-AP STA. In some embodiments, the station transmits the first information to another device, for example, another station. For example, the non-AP STA transmits the first station to the AP STA. Similarly, the AP STA transmits the first station to the non-AP STA. In the embodiments of the present disclosure, the devices for organizing transmission resources are not limited, which are flexibly selected based on actual application scenarios.

In some embodiments, the bandwidth-related information of the first channel includes information indicating that a bandwidth of the first channel is greater than a predetermined bandwidth of a subchannel. In the embodiments of the present disclosure, the predetermined bandwidth is a maximum channel bandwidth or a greater channel bandwidth in the communication system. For example, a maximum channel bandwidth within a 5 GHz frequency band is 160 MHz, and a maximum channel bandwidth within a 6 GHz frequency band is 320 MHz. The first channel is a newly added channel, and the bandwidth of the first channel is a newly added bandwidth. For example, in the UHR Wi-Fi communication, the bandwidth of the first channel is 240 MHz, 480 MHz, or 640 MHz within the 5 GHz frequency band, or is 240 MHz, 480 MHz, 640 MHz, or another newly added bandwidth within the 6 GHz frequency band. The detailed value of the newly added bandwidth in the above embodiments may be another value. In addition, the first information indicates that the bandwidth-related information of the first channel compatibly indicates another bandwidth-related information, for example, information related to one or more of 40 MHz, 80 MHz, 160 MHz or 320 MHz.

In some embodiments, the bandwidth-related information of the first channel includes at least one of a starting frequency, a bandwidth of a subchannel, or a channel center frequency index of a subchannel. In the embodiments of the present disclosure, the stating frequency is also referred to as a starting frequency. For example, an Operating Class field in a medium access control (MAC) frame indicates the stating frequency. For example, the Operating Class field indicates a stating frequency within a frequency band, for example, a stating frequency of a 2.4 GHz frequency band, a 5 GHz frequency band, or a 6 GHz frequency band. The first channel includes a plurality of subchannels. For example, subchannels of the first channel include a primary channel and a secondary channel. A channel center frequency index of a subchannel is determined based on a PHY parameter. For example, the PHY parameter dot11UHRCurrentChannelCenterFrequencyIndex0 (the current channel center frequency index 0) is from a center frequency segment CENTER_FREQUENCY_SEGMENT_0 parameter in an interface PHYCONFIG_VECTOR (a PHY configuration vector) of the PHY and the MAC.

In some embodiments, the first channel includes N adjacent second channels. N is an integer greater than 1. The bandwidth of the first channel is equal to a sum of bandwidths of N second channels. In the embodiments of the present disclosure, the second channel is a channel of another bandwidth in the communication system. For example, the second channel is a channel with a bandwidth of 80 MHz, 160 MHz, or 320 MHz. In the embodiments of the present disclosure, the second channel is also a subchannel of the first channel.

In some embodiments, the first channel includes a first subchannel and at least one second subchannel. The first subchannel is a primary channel, and each of the at least one second subchannel is a secondary channel. In the embodiments of the present disclosure, the first channel is divided into a plurality of subchannels, and the primary channel and the secondary channel are determined from the plurality of subchannels. The primary channel includes a primary 20 MHz channel, and the secondary channel is adjacent to the primary channel.

In some embodiments, the first channel is a 240 MHz channel. The 240 MHz channel is a channel with a bandwidth of 240 MHz within the 5 GHz frequency band. The first channel includes three adjacent second channels. The second channel is a channel with a bandwidth of 80 MHz within the 5 GHz frequency band or a channel with a bandwidth of 80 MHz within the 6 GHz frequency band.

In some embodiments, the first channel is a 240 MHz channel. The first subchannel is a primary 80 MHz channel, and two second subchannels in the first channel are a first secondary 80 MHz channel and a second secondary 80 MHz channel. The primary 80 MHz channel includes a primary 20 MHz channel. The primary 80 MHz channel is a primary channel with a bandwidth of 80 MHz. The primary 20 MHz channel is a primary channel with a bandwidth of 20 MHz. The first secondary 80 MHz channel is a first secondary channel with a bandwidth of 80 MHz. The second secondary 80 MHz channel is a second secondary channel with a bandwidth of 80 MHz.

In some embodiments, the first channel is a 240 MHz channel. The first subchannel is a primary 160 MHz channel, and the second subchannels is a secondary 80 MHz channel. The primary 160 MHz channel includes a primary 20 MHz channel. The primary 160 MHz channel is a primary channel with a bandwidth of 160 MHz. The secondary 80 MHz channel is a secondary channel with a bandwidth of 80 MHz.

In some embodiments, the channel center frequency index of the primary 20 MHz channel is 100, 104, 108, 112, 116, 120, or 128.

For example, the 240 MHz BSS includes the following options of the primary channel and the secondary channel.

Option 1: the primary 80 MHz channel, the secondary 80 MHz channel, and the secondary 80 MHz channel. In the 240 MHz BSS, the primary 80 MHz channel includes the primary 20 MHz channel, and the secondary 80 MHz channel 1 and secondary 80 MHz channel 2 do not include the primary 20 MHz channel. The primary 80 MHz channel, the secondary 80 MHz channel 1, and the secondary 80 MHz channel 2 form the 240 MHz channel in the 240 MHz BSS. The primary 20 MHz channel is any 20 MHz subchannel in the 240 MHz channel.

Option: the primary 160 MHz channel and the secondary 80 MHz. In the 240 MHz BSS, the primary 160 MHz channel includes the primary 20 MHz channel, and the secondary 80 MHz channel 1 does not include the primary 20 MHz channel. The primary 160 MHz channel and the secondary 80 MHz channel 1 form the 240 MHz channel in the 240 MHz BSS. The primary 20 MHz channel is one of 20 MHz channels in the 160 MHz channel within the 5 GHz frequency band in the institute of electrical and electronics engineers (IEEE) standard. The channel center frequency index of the primary 20 MHz channel is one of 100, 104, 108, 112, 116, 120, and 128.

In some embodiments, the first channel is a 480 MHz channel. The 480 MHz channel is a channel with a bandwidth of 480 MHz within the 6 GHz frequency band. The first channel includes three adjacent second channels. The second channel is a channel with a bandwidth of 160 MHz within the 6 GHz frequency band.

In some embodiments, the first channel is a 480 MHz channel. The first subchannel is a primary 320 MHz channel, and two second subchannels in the first channel are a first secondary 80 MHz channel and a second secondary 80 MHz channel. The primary 320 MHz channel includes the primary 20 MHz channel.

In some embodiments, the first channel is a first 480 MHz channel. The channel center frequency index of the first 480 MHz channel is 47 or 143. Alternatively, the first channel is a second 480 MHz channel. The channel center frequency index of the second 480 MHz channel is 79 or 175.

For example, the 480 MHz channel is constructed in the 6 GHz frequency band (or referred to as a spectral). The 480 MHz channel composes of any three adjacent 160 MHz channels within the 6 GHz frequency band. Examples of two types of 480 MHz channels are as follows: the 480 MHz-1 channel and the 480 MHz-2 channel. The channel center frequency index of the 480 MHz-1 channel is 47 or 143, and the channel center frequency index of the 480 MHz-2 channel is 79 or 175.

In addition, examples of the primary channel and the secondary channel in the 480 MHz BSS are as follows. In the 480 MHz BSS, the primary 320 MHz channel includes the primary 20 MHz channel, and the secondary 80 MHz channel 1 and secondary 80 MHz channel 2 do not include the primary 20 MHz channel. The primary 320 MHz channel, the secondary 80 MHz channel 1, and the secondary 80 MHz channel 2 form the 480 MHz channel in the 480 MHz BSS. The primary 20 MHz channel is any 20 MHz subchannel in the 480 MHz channel.

In some embodiments, the first channel is a 640 MHz channel. The 640 MHz channel is a channel with a bandwidth of 640 MHz within the 6 GHz frequency band. The first channel includes four adjacent second channels. The second channel is a channel with a bandwidth of 160 MHz within the 6 GHz frequency band.

In some embodiments, the first channel is a 640 MHz channel. The first subchannel is a primary 320 MHz channel, and the second subchannel is a secondary 320 MHz channel. The primary 320 MHz channel includes the primary 20 MHz channel.

In some embodiments, the first channel is a first 640 MHz channel. The channel center frequency index of the first 640 MHz channel is 63. Alternatively, the first channel is a second 640 MHz channel. The channel center frequency index of the second 640 MHz channel is 159.

For example, the 640 MHz channel is constructed in the 6 GHz frequency band. The 640 MHz channel composes of any four adjacent 160 MHz channels within the 6 GHz frequency band. Examples of two types of 640 MHz channels are as follows: the 640 MHz-1 channel and the 640 MHz-2 channel. The channel center frequency index of the 640 MHz-1 channel is 63, and the channel center frequency index of the 640 MHz-2 channel is 159.

In addition, the examples of the primary channel and the secondary channel in the 640 MHz BSS are as follows. In the 640 MHz BSS, the primary 320 MHz channel includes the primary 20 MHz channel, and the secondary 320 MHz channel 1 does not include the primary 20 MHz channel. The primary 320 MHz channel and the secondary 320 MHz channel form the 640 MHz channel in the 640 MHz BSS. The primary 20 MHz channel is any 20 MHz subchannel in the 640 MHz channel.

In some embodiments, the bandwidth-related information of the first channel includes an operating class corresponding to the first channel. The operating class corresponding to the first channel indicates at least one of the bandwidth of the first channel, the starting frequency of the first channel, or the channel center frequency index of the first channel.

In some embodiments, the operating class corresponding to the first channel includes at least one of:

a first operating class, defining that the first channel is a channel with a bandwidth of 240 MHz within the 5 GHz frequency band, the starting frequency of the first channel is 5 GHz, and the channel center frequency index of the first channel is 122;
a second operating class, defining that the first channel is a channel with a bandwidth of 480 MHz within the 6 GHz frequency band, the starting frequency of the first channel is 5.950 GHz, and the channel center frequency index of the first channel is 47, 79, 143, or 175; or

a third operating class, defining that the first channel is a channel with a bandwidth of 640 MHz within the 6 GHz frequency band, the starting frequency of the first channel is 5.950 GHz, and the channel center frequency index of the first channel is 63 or 159.

For example, a new operating class is determined based on the newly added 240 MHz, 480 MHz, and 640 MHz bandwidth.

The operating class a (the first operating class) defines the channel with the bandwidth of 240 MHz within the 5 GHz frequency band, the starting frequency of the channel being 5 GHz, and the channel center frequency index being 122. For example, a is equal to 138.

The operating class b (the second operating class) defines the channel with the bandwidth of 480 MHz within the 6 GHz frequency band, the starting frequency of the channel being 5.950 GHz, and the channel center frequency index being 47, 79, 143, or 175. For example, a is equal to 138 or 139.

The operating class c (the third operating class) defines the channel with the bandwidth of 640 MHz within the 6 GHz frequency band, the starting frequency of the channel being 5.950 GHz, and the channel center frequency index being 163 or 159. For example, a is equal to 138, 139, or 140.

Detailed values of a, b, and a are set depending on the actual needs.

In the embodiments of the present disclosure, the station receives and/or transmits the operating class corresponding to the first channel. For example, the AP station transmits the first information carrying the operating class corresponding to the first channel to the non-AP station. For example, the AP station receives the first information carrying the operating class corresponding to the first channel from the non-AP station.

In some embodiments, the operating class corresponding to the first channel is indicated in a first MAC frame and/or an Operating Class field in a first MAC element.

For example, a Reduced Neighbor Report element or a Neighbor Report element includes the Operating Class field. An operating class of a corresponding channel, for example, the first channel, is indicated by the Operating Class field.

In some embodiments, the Operating Class field further indicates at least one of a channel starting frequency, a channel spacing, or the channel center frequency index.

In some embodiments, the channel spacing represents the channel bandwidth.

In some embodiments, the bandwidth-related information of the first channel includes a bandwidth support capability of the station.

In the embodiments of the present disclosure, the station receives and/or transmits the bandwidth support capability of the station. For example, the AP station transmits the first information carrying the bandwidth support capability of the station to the non-AP station. For example, the AP station receives the first information carrying the bandwidth support capability of the station from the non-AP station. Receipt and/or transmission of the bandwidth support capability of the station by the station and receipt and/or transmission of the operating class corresponding to the first channel by the station may be performed in different times, which is flexibly selected depending on the actual needs.

In some embodiments, the bandwidth support capability of the station includes whether the station supports the PPDU related to the bandwidth of the first channel when operating in a first frequency band.

In some embodiments, the bandwidth support capability of the station includes at least one of:

whether to support a non-orthogonal frequency division multiple access (non-OFDMA) 240 MHz PPDU when operating in a 5 GHz frequency band;
whether to support a non-OFDMA 480 MHz PPDU when operating in a 6 GHz frequency band; or
whether to support a non-OFDMA 640 MHz PPDU when operating in a 6 GHz frequency band.

In the embodiments of the present disclosure, the non-OFDMA 240 MHz PPDU indicates a non-OFDMA PPDU with a bandwidth of 240 MHz, the non-OFDMA 480 MHz PPDU indicates a non-OFDMA PPDU with a bandwidth of 480 MHz, and the non-OFDMA 640 MHz PPDU indicates a non-OFDMA PPDU with a bandwidth of 640 MHz.

In some embodiments, the bandwidth support capability of the station is indicated in a UHR PHY Capabilities Information field in a UHR Capabilities element.

In some embodiments, the UHR Capabilities element is a second MAC element and/or in a second MAC frame. For example, the first station informs the second station the PHY capability of the first station by the UHR PHY capabilities information carried in the MAC frame.

For example, the UHR PHY Capabilities Information field includes the following subfields:

a Support for 240 MHz in 5 GHz subfield, indicating supporting the non-OFDMA 240 MHz PPDU when operating in the 5 GHz frequency band;
a Support for 480 MHz in 6 GHz subfield, indicating supporting the non-OFDMA 480 MHz PPDU when operating in the 6 GHz frequency band; and
a Support for 640 MHz in 6 GHz subfield, indicating supporting the non-OFDMA 640 MHz PPDU when operating in the 6 GHz frequency band.

In some embodiments, the bandwidth-related information of the first channel includes configuration information of the first channel in the BSS of the station.

In the embodiments of the present disclosure, the station receives and/or transmits the configuration information of the first channel in the BSS of the station. For example, the AP station transmits the first information carrying the configuration information of the first channel in the BSS of the station to the non-AP station. For example, the AP station receives the first information carrying the configuration information of the first channel in the BSS of the station from the non-AP station. Receipt and/or transmission of the bandwidth support capability of the station by the station, receipt and/or transmission of the operating class corresponding to the first channel by the station, and receipt and/or transmission of the configuration information of the first channel in the BSS of the station may be performed in different times, which is flexibly selected depending on the actual needs.

In some embodiments, the configuration information of the first channel includes a field indicating the bandwidth and a field indicating a channel center frequency index.

In some embodiments, the configuration information of the first channel is carried in a UHR Operation Information field in a UHR Operation element.

For example, the UHR Operation Information field in the UHR Operation element of the MAC element includes a Control field and a Channel Center Frequency Segment (CCFS) field. The Control field indicates the bandwidth, and the CCFS field indicates the channel center frequency index of the bandwidth of the BSS.

In some embodiments, the field indicating the channel center frequency index is the CCFS field, and the CCFS field includes a first CCFS subfield and a second CCFS subfield.

The first CCFS subfield indicates the channel center frequency index of the primary channel in the first channel, and the second CCFS subfield indicates the channel center frequency index of the first channel.

In some embodiments, the field indicating the channel center frequency index is the CCFS field, and the CCFS field includes a third CCFS subfield. The third CCFS subfield indicates the channel center frequency index of the first channel in the BSS.

Examples of two formats of CCFS fields are as follows.

1. Format 1 (the CCFS field includes a CCFS 0 field and a CCFS 1 field)

In the case that the bandwidth of the BSS is 240 MHz, the CCFS 0 field indicates a channel center frequency index of a primary 80 MHz channel (referring to Option 1 of the 240 MHz channel) of the bandwidth of the BSS, and the CCFS 1 field indicates a channel center frequency index of the bandwidth 240 MHz of the BSS. The CCFS 1 field > 0, and |CCFS1-CCFS0| = 16.

In the case that the bandwidth of the BSS is 240 MHz, the CCFS 0 field indicates a channel center frequency index of a primary 160 MHz channel (referring to Option 2 of the 240 MHz channel) of the bandwidth of the BSS, and the CCFS 1 field indicates a channel center frequency index of the bandwidth 240 MHz of the BSS. The CCFS 1 field > 0, and |CCFS1-CCFS0| = 8.

In the case that the bandwidth of the BSS is 480 MHz, the CCFS 0 field indicates a channel center frequency index of a primary 320 MHz channel of the bandwidth of the BSS, and the CCFS 1 field indicates a channel center frequency index of the bandwidth 480 MHz of the BSS. The CCFS 1 field > 0, and |CCFS1-CCFS0| = 16.

In the case that the bandwidth of the BSS is 640 MHz, the CCFS 0 field indicates a channel center frequency index of a primary 320 MHz channel of the bandwidth of the BSS, and the CCFS 1 field indicates a channel center frequency index of the bandwidth 640 MHz of the BSS. The CCFS 1 field > 0, and |CCFS1-CCFS0| = 32.

2. Format 2 (the CCFS field includes a CCFS 0 field)

In the case that the bandwidth of the BSS is 240 MHz, the CCFS 0 field indicates a channel center frequency index of the bandwidth of the BSS.

In the case that the bandwidth of the BSS is 480 MHz, the CCFS 0 field indicates a channel center frequency index of the bandwidth of the BSS.

In the case that the bandwidth of the BSS is 640 MHz, the CCFS 0 field indicates a channel center frequency index of the bandwidth of the BSS.

In some embodiments, the UHR Operation element is carried in at least one of a beacon frame, a probe response frame, an association response frame, or a reassociation response frame.

In the embodiments of the present disclosure, the station receives and/or transmits at least one of the beacon frame, the probe response frame, the association response frame, or the reassociation response frame. In addition, the at least one of the beacon frame, the probe response frame, the association response frame, or the reassociation response frame carries the configuration information of the first channel in the BSS of the station.

In some embodiments, the channel center frequency index of the primary 20 MHz channel is determined based on the channel center frequency index of the first channel, the number of 20 MHz channels in the first channel, and a location of the primary 20 MHz channel. The location of the primary 20 MHz channel corresponds to the channel center frequency index and the bandwidth of the first channel.

In some embodiments, the channel center frequency index of the first subchannel in the first channel is determined based on a starting frequency of the first channel, the channel center frequency index of the first channel, the number of 20 MHz channels in the first channel, and the location of the primary 20 MHz channel. The location of the primary 20 MHz channel corresponds to the channel center frequency index and the bandwidth of the first channel.

In some embodiments, the channel center frequency index of the second subchannel in the first channel is determined based on the starting frequency of the first channel and the channel center frequency index of the first channel.

For example, in the case that the 240 MHz channel is divided into three 80 MHz channels, and includes an 80 MHz channel, that is, a primary 80 MHz channel (that is, a first subchannel) and two secondary 80 MHz channels. The center frequency of the primary 80 MHz channel is determined based on a starting frequency of the 240 MHz channel, the channel center frequency index of the 240 MHz channel, the number of 20 MHz channels in the 240 MHz channel, and the location of the primary 20 MHz channel corresponding to the channel center frequency index and the bandwidth of the 240 MHz channel. The bandwidth of the first secondary 80 MHz channel (or referred to as a secondary 80 MHz channel 1) is determined based on the starting frequency of the 240 MHz channel and the channel center frequency index of the primary 80 MHz channel. The bandwidth of the second secondary 80 MHz channel (or referred to as a secondary 80 MHz channel 2) is determined based on the starting frequency of the 240 MHz channel and the channel center frequency index of the primary 80 MHz channel.

For example, in the case that the 240 MHz channel is divided into a primary 160 MHz channel (that is, a first subchannel) and a secondary 80 MHz channel (that is, a second subchannel). The center frequency of the primary 160 MHz channel is determined based on the starting frequency of the 240 MHz channel, the channel center frequency index of the 240 MHz channel, the number of 20 MHz channels in the 240 MHz channel, and the location of the primary 20 MHz channel corresponding to the channel center frequency index and the bandwidth of the 240 MHz channel. The bandwidth of the secondary 80 MHz channel is determined based on the starting frequency of the 240 MHz channel and the channel center frequency index of the primary 160 MHz channel.

For example, in the case that the 480 MHz channel is divided into a primary 320 MHz channel (that is, a first subchannel) and two secondary 80 MHz channels (that is, a second subchannel). The center frequency of the primary 320 MHz channel is determined based on a starting frequency of the 480 MHz channel, a channel center frequency index of the 480 MHz channel, the number of 20 MHz channels in the 480 MHz channel, and the location of the primary 20 MHz channel corresponding to the channel center frequency index and the bandwidth of the 480 MHz channel. The bandwidth of the secondary 80 MHz channel is determined based on the starting frequency of the 480 MHz channel and the channel center frequency index of the primary 320 MHz channel.

For example, in the case that the 640 MHz channel is divided into a primary 320 MHz channel (that is, a first subchannel) and a secondary 320 MHz channel (that is, a second subchannel). The center frequency of the primary 320 MHz channel is determined based on a starting frequency of the 640 MHz channel, a channel center frequency index of the 640 MHz channel, the number of 20 MHz channels in the 640 MHz channel, and the location of the primary 20 MHz channel corresponding to the channel center frequency index and the bandwidth of the 640 MHz channel. The bandwidth of the secondary 320 MHz channel is determined based on the starting frequency of the 640 MHz channel and the channel center frequency index of the primary 320 MHz channel.

The bandwidth 240 MHz, 480 MHz, and 640 MHz of the channel applicable to a next generation of Wi-Fi communication according to the embodiments of the present disclosure can improve the throughput of the communication device, for example, a Wi-Fi device, increase the data rate and the number of OFDMA transmission users, and greatly improve the utilization of 5GHz and 6GHz spectrum resources.

FIG. 4 is a schematic block diagram of a station 400 according to some embodiments of the present disclosure. The station 400 includes a processing unit 410.

The processing unit 410 is configured to acquire first information, wherein the first information indicates bandwidth-related information a first channel.

In some embodiments, the bandwidth-related information of the first channel includes information indicating that a bandwidth of the first channel is greater than a predetermined bandwidth of a subchannel.

In some embodiments, the bandwidth-related information of the first channel includes at least one of a starting frequency, a bandwidth of a subchannel, or a channel center frequency index of a subchannel.

In some embodiments, the bandwidth-related information of the first channel includes an operating class corresponding to the first channel. The operating class corresponding to the first channel indicates at least one of the bandwidth of the first channel, the starting frequency of the first channel, or the channel center frequency index of the first channel.

In some embodiments, the operating class corresponding to the first channel includes at least one of:

a first operating class, defining that the first channel is a channel with a bandwidth of 240 MHz within the 5 GHz frequency band, the starting frequency of the first channel is 5 GHz, and the channel center frequency index of the first channel is 122;

a second operating class, defining that the first channel is a channel with a bandwidth of 480 MHz within the 6 GHz frequency band, the starting frequency of the first channel is 5.950 GHz, and the channel center frequency index of the first channel is 47, 79, 143, or 175; or

a third operating class, defining that the first channel is a channel with a bandwidth of 640 MHz within the 6 GHz frequency band, the starting frequency of the first channel is 5.950 GHz, and the channel center frequency index of the first channel is 63 or 159.

In some embodiments, the operating class corresponding to the first channel is indicated in a first MAC frame and/or an Operating Class field in a first MAC element.

In some embodiments, the Operating Class field further indicates at least one of a channel starting frequency, a channel spacing, or the channel center frequency index.

In some embodiments, the bandwidth-related information of the first channel includes a bandwidth support capability of the station.

In some embodiments, the bandwidth support capability of the station includes whether the station supports the PPDU related to the bandwidth of the first channel when operating in a first frequency band.

In some embodiments, the bandwidth support capability of the station includes at least one of:

whether to support a non-OFDMA 240 MHz PPDU when operating in a 5 GHz frequency band;
whether to support a non-OFDMA 480 MHz PPDU when operating in a 6 GHz frequency band; or
whether to support a non-OFDMA 640 MHz PPDU when operating in a 6 GHz frequency band.

In some embodiments, the bandwidth support capability of the station is indicated in a UHR PHY Capabilities Information field in a UHR Capabilities element.

In some embodiments, the UHR Capabilities element is a second MAC element and/or in a second MAC frame.

In some embodiments, the bandwidth-related information of the first channel includes configuration information of the first channel in the BSS of the station.

In some embodiments, the configuration information of the first channel includes a field indicating the bandwidth and a field indicating a channel center frequency index.

In some embodiments, the field indicating the channel center frequency index is the CCFS field, wherein the CCFS field includes a first CCFS subfield and a second CCFS subfield.

The first CCFS subfield indicates the channel center frequency index of the primary channel in the first channel, and the second CCFS subfield indicates the channel center frequency index of the first channel.

In some embodiments, the field indicating the channel center frequency index is the CCFS field, and the CCFS field includes a third CCFS subfield, wherein the third CCFS subfield indicates the channel center frequency index of the first channel in the BSS.

In some embodiments, the configuration information of the first channel is carried in a UHR Operation Information field in a UHR Operation element.

In some embodiments, the UHR Operation element is carried in at least one of a beacon frame, a probe response frame, an association response frame, or a reassociation response frame.

In some embodiments, the first channel includes N adjacent second channels, wherein N is an integer greater than 1; and the bandwidth of the first channel is equal to a sum of bandwidths of N second channels.

In some embodiments, the first channel is a 240 MHz channel, wherein the 240 MHz channel is a channel with a bandwidth of 240 MHz within the 5 GHz frequency band; the first channel includes three adjacent second channels; and the second channel is a channel with a bandwidth of 80 MHz within the 5 GHz frequency band.

In some embodiments, the first channel is a 480 MHz channel, wherein the 480 MHz channel is a channel with a bandwidth of 480 MHz within the 6 GHz frequency band; the first channel includes three adjacent second channels; and the second channel is a channel with a bandwidth of 160 MHz within the 6 GHz frequency band.

In some embodiments, the first channel is a 640 MHz channel, wherein the 640 MHz channel is a channel with a bandwidth of 640 MHz within the 6 GHz frequency band; the first channel includes four adjacent second channels; and the second channel is a channel with a bandwidth of 160 MHz within the 6 GHz frequency band.

In some embodiments, the first channel includes a first subchannel and at least one second subchannel, wherein the first subchannel is a primary channel, and each of the at least one second subchannel is a secondary channel.

In some embodiments, the first channel is a 240 MHz channel; the first subchannel is a primary 80 MHz channel; and two second subchannels in the first channel are a first secondary 80 MHz channel and a second secondary 80 MHz channel, wherein the primary 80 MHz channel includes a primary 20 MHz channel.

In some embodiments, the first channel is a 240 MHz channel; the first subchannel is a primary 160 MHz channel; and the second subchannels is a secondary 80 MHz channel, wherein the primary 160 MHz channel includes a primary 20 MHz channel.

In some embodiments, the channel center frequency index of the primary 20 MHz channel is 100, 104, 108, 112, 116, 120, or 128.

In some embodiments, the first channel is a 480 MHz channel; the first subchannel is a primary 320 MHz channel; and two second subchannels in the first channel are a first secondary 80 MHz channel and a second secondary 80 MHz channel, wherein the primary 320 MHz channel includes the primary 20 MHz channel.

In some embodiments, the first channel is a first 480 MHz channel, wherein the channel center frequency index of the first 480 MHz channel is 47 or 143; or, the first channel is a second 480 MHz channel, wherein the channel center frequency index of the second 480 MHz channel is 79 or 175.

In some embodiments, the first channel is a 640 MHz channel; the first subchannel is a primary 320 MHz channel; and the second subchannel is a secondary 320 MHz channel, wherein the primary 320 MHz channel includes the primary 20 MHz channel.

In some embodiments, the first channel is a first 640 MHz channel, wherein the channel center frequency index of the first 640 MHz channel is 63; or, the first channel is a second 640 MHz channel, wherein the channel center frequency index of the second 640 MHz channel is 159.

In some embodiments, the channel center frequency index of the primary 20 MHz channel is determined based on the channel center frequency index of the first channel, the number of 20 MHz channels in the first channel, and a location of the primary 20 MHz channel; and the location of the primary 20 MHz channel corresponds to the channel center frequency index and the bandwidth of the first channel.

In some embodiments, the channel center frequency index of the first subchannel in the first channel is determined based on a starting frequency of the first channel, the channel center frequency index of the first channel, the number of 20 MHz channels in the first channel, and the location of the primary 20 MHz channel; and the location of the primary 20 MHz channel corresponds to the channel center frequency index and the bandwidth of the first channel.

The channel center frequency index of the second subchannel in the first channel is determined based on the starting frequency of the first channel and the channel center frequency index of the first channel.

The station 400 according to the embodiments of the present disclosure can achieve corresponding functions of the station in the method 300 in the above embodiments. For processes, functions, implementations, and technical effects corresponding to various modules (the submodule, the unit, the assembly, and the like) in the station 400, reference may be made to corresponding description in the method 300 in the above embodiments, which is not repeated herein. It should be noted that the functions of various modules (the submodule, the unit, the assembly, and the like) in the station 400 in the embodiments can be achieved by different modules (the submodule, the unit, the assembly, and the like) or the same module (the submodule, the unit, the assembly, and the like).

The embodiments of the present disclosure are applicable to the new generation of Wi-Fi communication, for example, the UHR. The new channel bandwidths in the embodiments of the present disclosure include 240 MHz, 480 MHz, and 640 MHz. The technical solutions according to the embodiments of the present disclosure are described hereinafter in several aspects.

1. Establishment and channelization of the 240 MHz bandwidth in the 5GHz frequency band, and establishment and channelization of the 480 MHz and the 640 MHz bandwidths in the 6GHz frequency band, and the corresponding operating classes.

2. MAC elements, for example, the UHR Capabilities element, indicating the bandwidth support capability of the STA are provided based on the new channel bandwidths.

3. MAC elements, for example, the UHR Operation element, indicating the channel configuration of the BSS are provided.

4. The calculation formula of the center frequency of the primary channel and the center frequency of the secondary channel is provided based on the interface of the MAC and the PHY, for example, PHYCONFIG_VECTOR (physical layer configuration vector).

1. 240 MHz/480 MHz/640 MHz channelization

240 MHz/480 MHz/640 MHz channelization refers to establishment and channelization of the 240 MHz bandwidth in the 5GHz frequency band, and establishment and channelization of the 480 MHz and the 640 MHz bandwidths in the 6GHz frequency band.

## (1) Establishment of the 240 MHz bandwidth in the 5GHz frequency band

In the case that the operating frequency band of the BSS is 5GHz, the bandwidth includes 20 MHz, 40 MHz, 80 MHz, and 160 MHz, as shown in FIG. 5.

Within the unlicensed national information infrastructure-2 (UNII-2) range, a 240 MHz bandwidth is extendable, as shown in the shaded part of FIG. 5. The bandwidth starting frequency and the bandwidth ending frequency of the 240 MHz bandwidth is at 5490 MHz and 5730 MHz respectively, and the channel center frequency index is 122.

For example, the channel center frequency is calculated using the following formula.

$$\text{Channel center frequency} = \text{Channel starting frequency} + 5 \times \text{nch(MHz)}.$$

The Channel starting frequency is 5GHz, and nch = 1, ... , 200.

For the primary channel and the secondary channel in the 240 MHz BBS, two options are provided in the embodiments of the present disclosure as follows.

Option 1: the primary 80 MHz channel + the secondary 80 MHz channel 1 + the secondary 80 MHz channel 2.

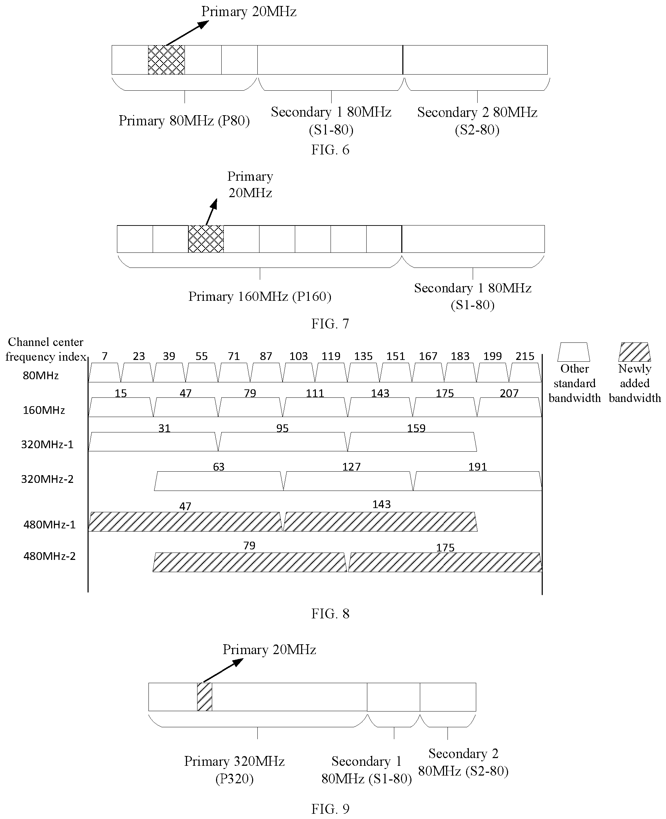

In the 240 MHz BBS, the primary 80 MHz channel (P80) includes the primary 20 MHz channel, and the secondary 80 MHz channel 1 (S1-80) and secondary 80 MHz channel 2 (S2-80) do not include the primary 20 MHz channel. The primary 80 MHz channel, the secondary 80 MHz channel 1, and the secondary 80 MHz channel 2 form the 240 MHz channel in the 240 MHz BSS. The primary 20 MHz channel is any 20 MHz subchannel in the 240 MHz channel. As shown in FIG. 6, according to the location of the primary 20 MHz channel, the 240 MHz channel includes P80, S1-80, and S2-80 in sequence. In the case that the location of the primary 20 MHz channel changes, the 240 MHz channel may include S1-80, P80, and S2-80 in sequence, or may include S1-80, S2-80, and P80 in sequence.

Option 2: the primary 160 MHz channel + the secondary 80 MHz channel 1.

In the 240 MHz BBS, the primary 160 MHz channel (P160) includes the primary 20 MHz channel, and the secondary 80 MHz channel 1 (S1-80) does not include the primary 20 MHz channel. The primary 160 MHz channel and the secondary 80 MHz channel 1 form the 240 MHz channel in the 240 MHz BSS. As shown in FIG. 7, according to the location of the primary 20 MHz channel, the 240 MHz channel includes P160 and S1-80 in sequence. In the case that the location of the primary 20 MHz channel changes, the 240 MHz channel may include S1-80 and P160 in sequence.

The primary 20 MHz channel may be one of 20 MHz channels in the 160 MHz channel in the IEEE standard. In the case that the AP STA operating in the 5 GHz frequency band establishes the 240 MHz BBS, as shown in FIG. 5, the primary 20 MHz channel is in a 160 MHz channel with the channel center frequency index of 114. That is, the channel center frequency index of the primary 20 MHz channel is at least one of 100, 104, 108, 112, 116, 120, or 128. The subchannel with the channel center frequency index of 132, 136, 140, and 144 cannot act as the primary 20 MHz channel.

## (2) Establishment of the 480 MHz bandwidth in the 6 GHz frequency band

In the case that the operating frequency band of the BSS is 6GHz, the bandwidth defined in IEEE 802.11 includes 20 MHz, 40 MHz, 80 MHz, 60 MHz, and 320 MHz, as shown in FIG. 8 (20 MHz and 40 MHz are not shown). The 480 MHz bandwidth and channelization thereof are provided in the embodiments of the present disclosure as follows.

The 480 MHz channel composes of any three adjacent 160 MHz channels within the 6 GHz frequency band. Referring to FIG. 8, the embodiments of the present disclosure provide division examples of two types of 480 MHz channel: 480 MHz-1 and 480 MHz-2. For example, the channel center frequency index of the 480 MHz-1 is 47 and 143, and the channel center frequency index of the 480 MHz-2 is 79 and 175.

Examples of the primary channel and the secondary channel in the 480 MHz BBS in the embodiments of the present disclosure are as follows. In the 480 MHz BSS, the primary 320 MHz channel includes the primary 20 MHz channel, and the secondary 80 MHz channel 1 and secondary 80 MHz channel 2 do not include the primary 20 MHz channel. The primary 320 MHz channel, the secondary 80 MHz channel 1, and the secondary 80 MHz channel 2 form the 480 MHz channel in the 480 MHz BSS. The primary 20 MHz channel is any 20 MHz subchannel in the 480 MHz channel. As shown in FIG. 9, according to the location of the primary 20 MHz channel, the 480 MHz channel includes P160, S1-80, and S2-80 in sequence. In the case that the location of the primary 20 MHz channel changes, the 480 MHz channel may include S1-80, P160, and S2-80 in sequence, or may include S1-80, S2-80, and P160 in sequence.

## (3) Establishment of the 640 MHz bandwidth in the 6GHz frequency band

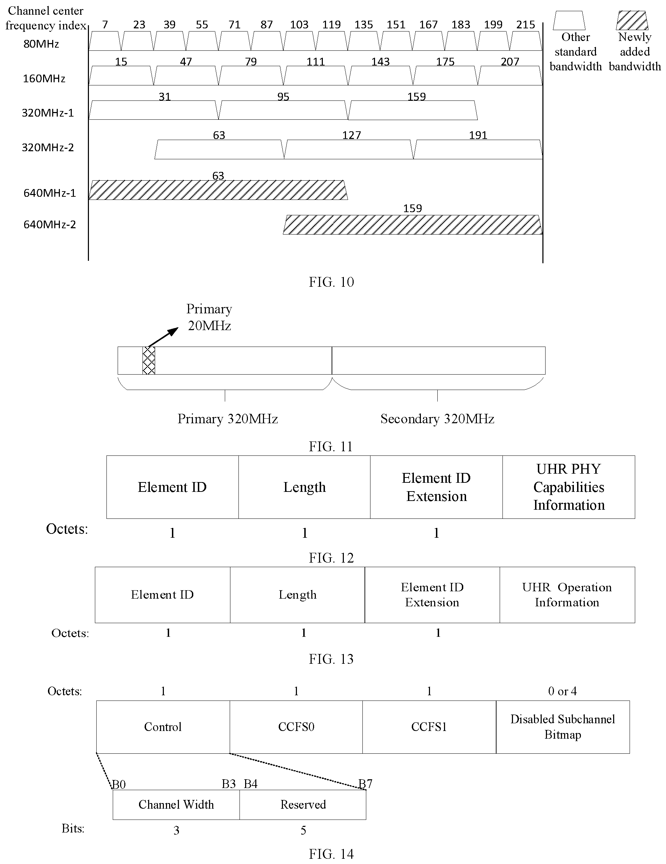

In the case that the operating frequency band of the BSS is 6GHz, the bandwidth defined in IEEE 802.11 includes 20 MHz, 40 MHz, 80 MHz, 60 MHz, and 320 MHz, as shown in FIG. 10 (20 MHz and 40 MHz are not shown). The 640 MHz bandwidth and channelization thereof are provided in the embodiments of the present disclosure as follows.

The 640 MHz channel composes of any four adjacent 160 MHz channels within the 6 GHz frequency band. Referring to FIG. 10, the embodiments of the present disclosure provide division examples of two types of 640 MHz channel: 640 MHz-1 and 640 MHz-2. For example, the channel center frequency index of the 640 MHz-1 is 63, and the channel center frequency index of the 640 MHz-2 is 159.

In the embodiments of the present disclosure , in the 640 MHz BSS, the primary 320 MHz channel includes the primary 20 MHz channel, and the secondary 320 MHz channel 1 does not include the primary 20 MHz channel. The primary 320 MHz channel and the secondary 320 MHz channel 2 form the 640 MHz channel in the 640 MHz BSS. The primary 20 MHz channel is any 20 MHz subchannel in the 640 MHz channel. As shown in FIG. 11, according to the location of the primary 20 MHz channel, the 640 MHz channel includes P320 and S320 in sequence. In the case that the location of the primary 20 MHz channel changes, the 640 MHz channel may include S320 and P320 in sequence.

(4) Definition of the operating class

A new operating class is defined in the embodiments of the present disclosure based on the 240 MHz, 480 MHz, and 640 MHz bandwidths, the channel stating frequency, and the channel center frequency index.

The operating class a defines the channel with the bandwidth of 240 MHz within the 5 GHz frequency band, the starting frequency of the channel being 5 GHz, and the channel center frequency index being 122. For example, a is equal to 138.

The operating class b defines the channel with the bandwidth of 480 MHz within the 6 GHz frequency band, the starting frequency of the channel being 5.950 GHz, and the channel center frequency index being 47, 79, 143, or 175. For example, a is equal to 138 or 139.

The operating class c defines the channel with the bandwidth of 640 MHz within the 6 GHz frequency band, the starting frequency of the channel being 5.950 GHz, and the channel center frequency index being 163 or 159. For example, a is equal to 138, 139, or 140.

In some embodiments, the operating class is indicated in a first MAC frame and/or an Operating Class field in a first MAC element. For example, a Reduced Neighbor Report element or a Neighbor Report element includes the Operating Class field. An operating class of a corresponding channel is indicated by the Operating Class field. A length of the Operating Class field is one byte, or another quantity of bytes, which is flexibly set depending on the actual needs.

The definition of the operating class is listed in Table 3-1. The Operating Class field indicates the operating class, and further indicates the channel starting frequency, the Channel spacing, and the channel center frequency index.

Table 1 Global operating classes

| Operating class | Nonglobal operating class(es) | Channel starting frequency (GHz) | Channelspacing (MHz) | Channelset | Channel center frequency index | Behavior limits set |
|---|---|---|---|---|---|---|
| 137 | - | 5.950 | 320 | - | 31, 63, 95, 127, 159, 191 | |
| 138 | - | 5 | 240 | - | 122 | |
| 139 | - | 5.950 | 480 | - | 47, 79, 143, 175 | |
| 140 | - | 5.950 | 640 | - | 63, 159 | |
| 141-179 | - | Reserved | Reserved | Reserved | Reserved | Reserved |

2. MAC elements, for example, the UHR Capabilities element, indicating the bandwidth support capability of the STA

The STA declares to be a UHR STA by transmitting the UHR Capabilities element. In the case that the STA is an AP STA, the UHR Capabilities element is carried in the beacon frame, the probe response frame, the probe response frame, the association response frame, or the reassociation response frame. In the case that the STA is a non-AP STA, the UHR Capabilities element is carried in the probe request frame, the association request frame, or the reassociation request frame.

The UHR Capabilities element includes a series of fields that broadcast the UHR capability of the UHR STA. As shown in FIG. 12, the UHR Capabilities element includes the Element ID field, the Length field, the Element ID Extension field, and the UHT PHY Capabilities Information field.

In the embodiments of the present disclosure, examples of the Support for 240 MHz in 5 GHz subfield, the Support for 480 MHz in 6 GHz subfield, and the Support for 640 MHz in 6 GHz subfield in the UHT PHY Capabilities Information field are listed in Table 2.

Table 2 UHR PHY Capabilities Information filed

| Subfield | Definition | Encoding |
|---|---|---|
| Support for 240 MHz in 5 GHz | Indicates support for non-OFDMA 240 MHz PPDUs when operating in the 5 GHz frequency band | Set to 0 if not supported<br>Set to 1 if supported |
| Support for 480 MHz in 6 GHz | Indicates support for non-OFDMA 480 MHz PPDUs when operating in the 6 GHz frequency band | Set to 0 if not supported.<br>Set to 1 if supported. |
| Support for 540 MHz in 6 GHz | Indicates support for non-OFDMA 640 MHz PPDUs when operating in the 6 GHz frequency band | Set to 0 if not supported.<br>Set to 1 if supported. |

3. MAC elements, for example, the UHR Operation element, indicating the channel configuration of the BSS

The stations in the UHR BSS (the UHR STAs) are controlled by the following elements.

In the case that the operating frequency band of the STA is 2.4 GHz, a High-throughput (HT) Operation element, a High-efficiency (HE) Operation element, an Extremely high throughput (EHT) Operation element, and a UHR Operation element controls the UHR STAs.

In the case that the operating frequency band of the STA is 5 GHz, a Very High Throughput Operation element, an HE Operation element, an EHT Operation element, and a UHR Operation element controls the UHR STAs.

In the case that the operating frequency band of the STA is 6 GHz, an HE Operation element, an EHT Operation element, and a UHR Operation element controls the UHR STAs.

For example, an example of the format of the UHR Operation element is shown in FIG. 13, the UHR Operation element includes the Element ID field, the Length field, the Element ID Extension field, and the UHT Operation Information field. The UHR Operation element is carried in the beacon frame, the probe response frame, the association response frame, or the reassociation response frame. In addition, the UHR non-AP STA acquires the configuration information of the channel in the BSS from the UHR Operation Information subfield in the UHR Operation element. The example of the UHR Operation Information subfield is provided in the embodiments of the present disclosure.

The UHR Operation Information subfield includes the following subfields.

(1) A Control subfield, indicating the bandwidth.
(2) A CCFS subfield, indicating the center frequency index of the channel in the BSS.

A Disabled Subchannel Bitmap subfield. The field is a 32-bit bitmap. A lowest bit indicates the 20 MHz subchannel of the lowest frequency in the BSS bandwidth. Each successive bit in the bitmap indicates a 20 MHz subchannel corresponding to a next higher frequency. Bit 1 indicates that the corresponding 20 MHz subchannel is punched, and bit 0 indicates that the corresponding 20 MHz subchannel is not punched. The punching mode can follow the punching mode of the non-OFDMA PPDU transmission.

Based on different numbers of CCFSs, the embodiments of the present disclosure provide two formats of the UHR Operation Information subfield as follows.

Format 1: the CCFSO field + the CCFS1 field

The format 1 of the UHR Operation Information subfield is shown in FIG. 14. The channel center frequency index is indicated by two subfields: the CCFSO field and the CCFS1 field.

For the CCFSO field, in the case that the BSS bandwidth is at least one of 20 MHz, 40 MHz, or 80 MHz, the CCFSO field indicates the channel center frequency index of the BSS bandwidth; and in the case that the BSS bandwidth is at least one of 160 MHz, 240 MHz, 320 MHz, 480 MHz, or 640 MHz, indication modes of the CCFS0 field includes at least one of the following cases.

In the case that the BSS bandwidth is 160 MHz, the CCFSO field indicates the channel center frequency index of the primary 80 MHz channel in the 160 MHz BSS.

In the case that the BSS bandwidth is 240 MHz, the CCFSO field indicates the channel center frequency index of the primary 80 MHz channel or the channel center frequency index of the primary 160 MHz channel in the 240 MHz BSS.

In the case that the BSS bandwidth is 320 MHz, the CCFSO field indicates the channel center frequency index of the primary 160 MHz channel in the 320 MHz BSS.

In the case that the BSS bandwidth is 480 MHz, the CCFSO field indicates the channel center frequency index of the primary 320 MHz channel in the 480 MHz BSS.

In the case that the BSS bandwidth is 640 MHz, the CCFSO field indicates the channel center frequency index of the primary 320 MHz channel in the 640 MHz BSS.

For the CCFS1 field, in the case that the BSS bandwidth is 20 MHz, 40 MHz, or 80 MHz, the CCFS1 field indicates 0; and in the case that the BSS bandwidth is at least one of 160 MHz, 240 MHz, 320 MHz, 480 MHz, or 640 MHz, the CCFS1 field indicates the channel center frequency index of at least one of 160 MHz, 240 MHz, 320 MHz, 480 MHz, or 640 MHz BSS bandwidth, as listed in Table 3 and Table 4.

Table 3 Channel Width, CCFSO and CCFS1 subfields in Format 1

| Subfield | Definition | Encoding |
|---|---|---|
| Channel Width | This subfield defines the UHR BSS bandwidth. | Set to 0 for 20 MHz UHR BSS bandwidth. Set to 1 for 40 MHz UHR BSS bandwidth. Set to 2 for 80 MHz UHR BSS bandwidth. Set to 3 for 160 MHz UHR BSS bandwidth. Set to 4 for 240 MHz UHR BSS bandwidth. Set to 5 for 320 MHz UHR BSS bandwidth. Set to 6 for 480 MHz UHR BSS bandwidth. Set to 7 for 640 MHz UHR BSS bandwidth. |
| CCFSO | This subfield defines a channel center frequency for a 20, 40, 80, 160, 240, 320, 480 or 640 MHz UHR BBS. | For 20, 40 or 80 MHz BSS bandwidth, indicates the channel center frequency index for the 20, 40 or 80 MHz channel on which the UHRBSS operates. For 160 MHz BSS bandwidth, indicates the channel center frequency index of the primary 80 MHz channel. For 240 MHz BSS bandwidth, indicates the channel center frequency index of the primary 80MHz or primary 160MHz channel. For 320 MHz BSS bandwidth, indicates the channel center frequency index of the primary 160 MHz channel. For 480 MHz BSS bandwidth, indicates the channel center frequency index of the primary 320 MHz channel. For 640 MHz BSS bandwidth, indicates the channel center frequency index of the primary 320 MHz channel. |
| CCFS1 | This subfield defines a channel center frequency for a 160, 240, 320, 480 or 640 MHz UHRBBS. | For a 20, 40 or 80 MHz BSS bandwidth, this subfield is set to 0. For a 160 MHz BSS bandwidth, indicates the channel center frequency index of the 160 MHz channel on which the UHR BSS operates. For a 240 MHz BSS bandwidth, indicates the channel center frequency index of the 240 MHz channel on which the UHR BSS operates. For a 320 MHz BSS bandwidth, indicates the channel center frequency index of the 320 MHz channel on which the UHR BSS operates. For a 480 MHz BSS bandwidth, indicates the channel center frequency index of the 480 MHz channel on which the UHR BSS operates. For a 640 MHz BSS bandwidth, indicates the channel center frequency index of the 640 MHz channel on which the UHR BSS operates. |

Table 4 UHR BSS channel width in Format 1

| Channel Width subfield | CCFS1 subfield | UHR BSS channelwidth (MHz) |
|---|---|---|
| 0 | 0 | 20 |
| 1 | 0 | 40 |
| 2 | 0 | 80 |
| 3 | CCFS1 > 0 and \|CCFS1 - CCFS0\| = 8 | 160 |
| 4 | CCFS1 > 0 and \|CCFS1 - CCFS0\| = 16, or CCFS1 > 0 and \|CCFS1 - CCFS0\| = 8 | 240 |
| 5 | CCFS1 > 0 and \|CCFS1 - CCFS0\| = 16 | 320 |
| 6 | CCFS1 > 0 and \|CCFS1 - CCFS0\| =16 | 480 |
| 7 | CCFS1 > 0 and \|CCFS1 - CCFS0\| = 32 | 640 |

In the above table, the value of 4 of the channel width indicates CCFS1 > 0 and |CCFS1 - CCFS0| = 16, which corresponds to Option 1; or, the value of 4 of the channel width indicates CCFS1 > 0 and |CCFS1 - CCFS0| = 8, which corresponds to Option 2.

Format 2: the CCFSO field

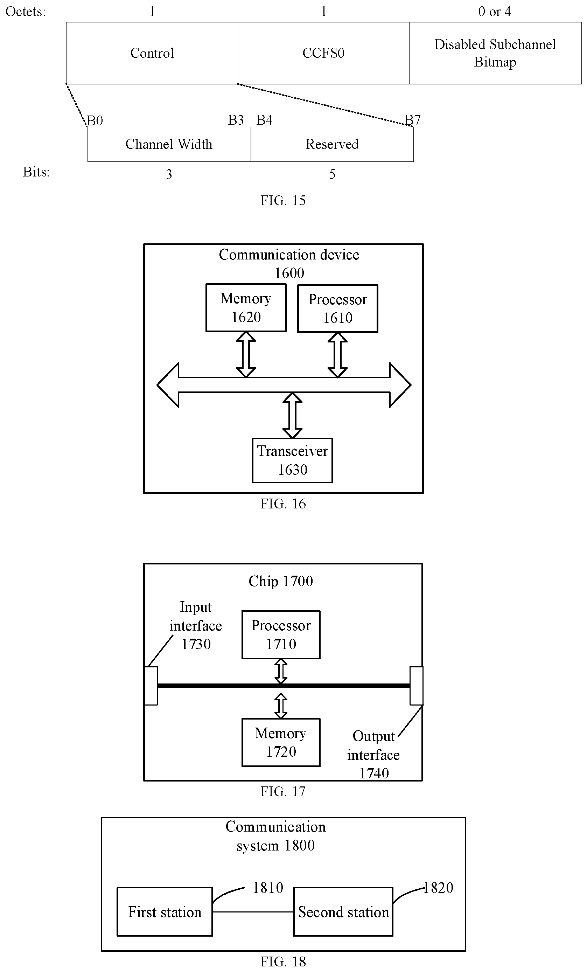

The format 2 of the UHR Operation Information subfield is shown in FIG. 15.
In the case that the BSS bandwidth is 20/40/80/160/240/320/480/640 MHz, the CCFSO field indicates the channel center frequency index of the 20/40/80/160/240/320/480/640 MHz channel.

Second Example:

Table 5 Channel Width, CCFSO subfield, and CCFS1 subfield in Format 2

| Subfield | Definition | Encoding |
|---|---|---|
| Channel Width | This subfield defines the UHR BSS bandwidth. | Set to 0 for 20 MHz UHR BSS bandwidth.<br>Set to 1 for 40 MHz UHR BSS bandwidth.<br>Set to 2 for 80 MHz UHR BSS bandwidth.<br>Set to 3 for 160 MHz UHR BSS bandwidth.<br>Set to 4 for 240 MHz UHR BSS bandwidth.<br>Set to 5 for 320 MHz UHR BSS bandwidth.<br>Set to 6 for 480 MHz UHR BSS bandwidth.<br>Set to 7 for 640 MHz UHR BSS bandwidth. |
| CCFSO | This subfield defines a channel center frequency for a 20, 40, 80, 160, 320, 240, 480 or 640 MHz UHR BBS. | For 20, 40 or 80 MHz BSS bandwidth, indicates the channel center frequency index for the 20, 40 or 80 MHz channel on which the UHRBSS operates.<br>For a 160 MHz BSS bandwidth, indicates the channel center frequency index of the 160 MHz channel.<br>For a 240 MHz BSS bandwidth, indicates the channel center frequency index of the 240 MHz channel on which the UHR BSS operates.<br>For a 320 MHz BSS bandwidth, indicates the channel center frequency index of the 320 MHz channel.<br>For a 480 MHz BSS bandwidth, indicates the channel center frequency index of the 480 MHz channel on which the UHR BSS operates.<br>For a 640 MHz BSS bandwidth, indicates the channel center frequency index of the 640 MHz channel on which the UHR BSS operates. |

4. The center frequency of interaction-channel of the MAC and the PHY

The PHY provides an interface to the MAC by extending the general PHY service interface. The interface includes a transmission vector (TXVECTOR), a receipt vector (RXVECTOR), a PHY configuration vector (PHYCONFIG_VECTOR), a trigger vector (TRIG_VECTOR), and the like. The MAC configures the PHY using the PHYCONFIG_VECTOR to cause the PHY operation to be dependent from the frame transmission or receipt.

For example, the PHYCONFIG_VECTOR carried in the PHY-CONFIG.request primitive of the UHR PHY includes an operating channel (OPERATING_CHANNEL) parameter. The parameter indicates the operating channel or the primary channel. The PHY sets a current primary channel (dot11CurrentPrimaryChannel) to a value of the OPERATING_CHANNEL parameter.

For example, the PHYCONFIG_VECTOR carried in the PHY-CONFIG.request primitive of the UHR PHY includes a channel width (CHANNEL _WIDTH) parameter. The parameter indicates a bandwidth of the operating channel, which has a value of at least one of 20 MHz, 40 MHz, 80 MHz, 160 MHz, 240 MHz, 320 MHz, 480 MHz, or 640 MHz. The PHY sets a UHR current channel width (dot11UHRCurrentChannelWidth) to a value of the CHANNEL_WIDTH parameter.

For example, the PHYCONFIG_VECTOR carried in the PHY-CONFIG.request primitive of the UHR PHY includes a channel frequency segment (CENTER _FREQUENCY_SEGMENT_0) parameter. The parameter indicates a channel center frequency, which has a value of one of 1 to 255. The PHY sets a current channel center frequency index (dot11UHRCurrentChannelCenterFrequencyIndex0) to a value of the CENTER _FREQUENCY_0 parameter.

The Operating Class field in the MAC frame indicates the channel starting frequency.

Then:

$$f_{c,idx0} = \mathrm{dot11UHRCurrentChannelCenterFrequencyIndex0} \quad (1);$$

$$f_{P20,idx} = \mathrm{dot11CurrentPrimaryChannel} \quad (2);$$

$$f_{CH,\mathrm{start}} = \mathrm{dot11ChannelStartingFactor} \times 500\mathrm{kHz} \quad (3).$$

dot11UHRCurrentChannelCenterFrequencyIndex0 and dot11CurrentPrimaryChannel are listed in Table 6, and dot11ChannelStartingFactor× 500kHz represents the channel starting frequency.

Table 6 Specification fields for the UHR channel

| Field | Meaning |
|---|---|
| dot11 UHRCurrentChannel Width | Channel width. Possible values represent 20 MHz, 40 MHz, 80 MHz, 160 MHz, 240MHz, 320 MHz, 480MHz and 640MHz channels. |
| dot11UHRCurrentChannel CenterFrequencyIndex0 | For a 20 MHz, 40 MHz, 80 MHz, 160 MHz, 240MHz, 320 MHz, 480MHz or 640MHz channel, it denotes the location of the channel center frequency. Valid range is 1 to 13 for 2.4 GHz band, 1 to 200 for 5 GHz band, and 1 to 233 for 6 GHz band. |
| dot11CurrentPrimaryChan nel | Denotes the location of the primary 20 MHz channel. Valid range is 1 to 13 for 2.4 GHz band, 1 to 200 for 5 GHz band, and 1 to 233 for 6 GHz band. |

(1) The channel center frequency index of the primary 20 MHz channel is calculated.

In the case that UHR dotllUHRCurrentChannelWidth is 240 MHz, 480 MHz, or 640 MHz, the channel center frequency index $f_{P20,idx}$, of the primary 20 MHz channel and the channel center frequency index $f_{c,idx0}$ of the current channel are:

$$f_{P20,idx} = f_{c,idx0} - 4 \cdot \left( \frac{N_{20MHz}}{2} - n_{P20} \right) + 2 \quad (4).$$

$N_{20MHz}$ represents the number of 20 MHz subchannels in the current channel.

$$N_{20MHz} = \begin{cases} 12, \text{if dot11CurrentChannelWidth indicates 240 MHz} \\ 24, \text{if dot11CurrentChannelWidth indicates 480 MHz} \\ 32, \text{if dot11CurrentChannelWidth indicates 640 MHz} \end{cases}$$ represents $N_{20MHz}$ = 12 in the case 32, if dot11-CurrentChannelWidth indicates 640 MHz that the width of the current channel is 240 MHz, $N_{20MHz}$ = 24 in the case that the width of the current channel is 480 MHz, and $N_{20MHz}$ = 36 in the case that the width of the current channel is 640 MHz.

The location $n_{P20}$ of the primary 20 MHz channel is an integer and represents a location of a primary 20 MHz channel corresponding to the center frequency index of the UHR current channel (dot11UHRCurrentChannelCenter-FrequencyIndex0) and the width of the UHR current channel (dot11TUHRCurrentChannelWidth), and a value of the location $n_{P20}$ is $0 \leq n_{P20} \leq N_{20MHz}$ - 1.

(2) The channel center frequency indexes of the primary channel, the secondary channel 1, and the secondary channel 2 in the 240 MHz are calculated.

In the case that UHR dot11UHRCurrentChannelWidth is 240 MHz, $N_{20MHz}$ = 12.

(2-1) Option 1 (P80+S1-80+S2-80)

The center frequency index of the primary 80 MHz channel is $f_{CH,\text{start}} + 5 \times f_{P80,idx}$ MHz, and the channel center frequency index $f_{P80,idx}$ of the primary 80 MHz channel is shown in formula (5):

$$f_{P80,idx} = f_{c,idx0} - 16 \cdot \left( \frac{N_{20MHz}}{8} - n_{P80} \right) + 8 \qquad (5).$$

$n_{P80} = \left\lfloor \frac{n_{P20}}{4} \right\rfloor$. $n_{P20}$ is an integer and represents a location of a primary 20 MHz channel corresponding to dot11UHRCurrentChannelCenterFrequencyIndex0 and dot11UHRCurrentChannelWidth, and a value of the $n_{P20}$ is $0 \leq n_{P20} \leq N_{20MHz}$ - 1.

The center frequency index of the secondary 80 MHz channel 1 is $f_{CH,\text{start}} + 5 \times f_{S1\ 80,idx}$ MHz, and the channel center frequency index of the secondary 80 MHz channel 2 is $f_{CH,\text{start}} + 5 \times f_{S2\ 80,idx}$ MHz. The channel center frequency index of the secondary 80 MHz channel 1 $f_{S1\ 80,idx}$ and the channel center frequency index of the secondary 80 MHz channel 1 $f_{S2\ 80,idx}$ are shown in formula (6) to formula (8).

In the case that $n_{P80}$ = 0, the primary 80 MHz channel (P80) is at a location with a lowest frequency.

$$f_{S1\ 80,idx} = f_{P80,idx} + 16;$$
$$f_{S2\ 80,idx} = f_{P80,idx} + 2 \times 16 \qquad (6).$$

In the case that $n_{P80}$ = 1, the primary 80 MHz channel (P80) is at a location with an intermediate frequency.

$$f_{S1\ 80,idx} = f_{P80,idx} - 16;$$
$$f_{S2\ 80,idx} = f_{P80,idx} + 16 \qquad (7).$$

In the case that $n_{P80}$ = 2, the primary 80 MHz channel (P80) is at a location with a highest frequency.

$$f_{S1\ 80,idx} = f_{P80,idx} - 16;$$
$$f_{S2\ 80,idx} = f_{P80,idx} - 2 \times 16 \qquad (8).$$

(2-2) Option 2 (P160+S1-80)

The center frequency index of the primary 160 MHz channel is $f_{CH,\text{start}} + 5 \times f_{P160,idx}$ MHz, and the channel center frequency index $f_{P160,idx}$ of the primary 160 MHz channel is shown in formula (9):

$$f_{P160,idx} = f_{c,idx0} - 32 \cdot \left( \frac{N_{20MHz}}{16} - n_{P160} \right) + 16 \qquad (9).$$

The center frequency index of the secondary 80 MHz channel 1 is $f_{CH,\text{start}} + 5 \times f_{S1\ 80,idx}$ MHz, and the channel center frequency index of the secondary 80 MHz channel 1 $f_{S1\ 80,idx}$ and the channel center frequency index of the secondary 80 MHz channel 1 is shown in formula (10).

$$f_{S1\ 80,idx} = f_{P160,idx} + 24 \qquad (10).$$

$n_{P160} = \left\lfloor \frac{n_{P20}}{8} \right\rfloor$ . $n_{P20}$ is an integer and represents a location of a primary 20 MHz channel corresponding to dot11UHRCurrentChannelCenterFrequencyIndex0 and dot11UHRCurrentChannelWidth, and a value of the $n_{P20}$ is $0 \leq n_{P20} \leq 7$.

(3) The channel center frequency indexes of the primary 320 MHz channel, the secondary 80 MHz channel 1, and the secondary 80 MHz channel 2 in the 480 MHz are calculated.

In the case that UHR dot11UHRCurrentChannelWidth is 480 MHz, $N_{20MHz}$ = 24.

The center frequency index of the primary 320 MHz channel is $f_{CH,\text{start}} + 5 \times f_{P320,idx}$ MHz, and the channel center frequency index $f_{P320,idx}$ of the primary 320 MHz channel is shown in formula (11):

$$f_{P320,idx} = f_{c,idx0} - 64 \cdot \left( \frac{N_{20MHz}}{32} - n_{P320} \right) + 32 \cdot (1 - n_{P320}) \qquad (11).$$

$n_{P320} = \left\lfloor \frac{n_{P20}}{16} \right\rfloor$ . $n_{P20}$ is an integer and represents a location of a primary 20 MHz channel corresponding to dot11UHRCurrentChannelCenterFrequencyIndex0 and dot11UHRCurrentChannelWidth, and a value of the $n_{P20}$ is $0 \leq n_{P20} \leq N_{20MHz}$ - 1.

The channel center frequency index of the secondary 80 MHz channel 1 is $f_{CH,\text{start}} + 5 \times f_{S1\ 80,idx}$ MHz, and the channel center frequency index of the secondary 80 MHz channel 2 is $f_{CH,\text{start}} + 5 \times f_{S2\ 80,idx}$ MHz. The channel center frequency index of the secondary 80 MHz channel 1 $f_{S1\ 80,idx}$ and the channel center frequency index of the secondary 80 MHz channel 2 $f_{S2\ 80,idx}$ are shown in formula (12) to formula (13).

In the case that $n_{P320}$ = 0, the primary 320 MHz channel (P320) is at a location with a lowest frequency.

$$f_{S1\ 80,idx} = f_{P320,idx} + 40;$$
$$f_{S2\ 80,idx} = f_{P320,idx} + 56 \qquad (12).$$

In the case that $n_{P320}$ = 1, the primary 320 MHz channel (P320) is at a location with a highest frequency.

$$f_{S1\ 80,idx} = f_{P320,idx} - 40;$$
$$f_{S2\ 80,idx} = f_{P320,idx} - 56 \qquad (13).$$

(4) The channel center frequency indexes of the primary 320 MHz channel and the secondary 320 MHz channel are calculated.

In the case that UHR dot11UHRCurrentChannelWidth is 640 MHz, $N_{20MHz}$ = 32.

The center frequency index of the primary 320 MHz channel is $f_{CH,\text{start}} + 5 \times f_{P320,idx}$ MHz, and the channel center frequency index $f_{P320,idx}$ of the primary 320 MHz channel is shown in formula (14):

$$f_{P320,idx} = f_{c,idx0} - 64 \cdot \left( \frac{N_{20MHz}}{32} - n_{P320} \right) + 32 \qquad (14).$$

The center frequency index of the secondary 320 MHz channel is $f_{CH,\text{start}} + 5 \times f_{S320,idx}$, and the channel center frequency index $f_{S320,idx}$ of the secondary 320 MHz channel is shown in formula (15):

$$f_{S320,idx} = \begin{cases} f_{P320,idx} + 64, & \text{in the case that } n_{P320} \text{ is an even number} \\ f_{P320,idx} - 64, & \text{in the case that } n_{P320} \text{ is an odd number} \end{cases} \qquad (15).$$

$n_{P320} = \left\lfloor \frac{n_{P20}}{16} \right\rfloor$ . $n_{P20}$ is an integer and represents a location of a primary 20 MHz channel corresponding to dot11UHRCurrentChannelCenterFrequencyIndex0 and dot11UHRCurrentChannelWidth, and a value of the $n_{P20}$ is 0

$\leq n_{P20} \leq N_{20MHz}$ - 1.

The bandwidth 240 MHz, 480 MHz, and 640 MHz of the channel applicable to a next generation of Wi-Fi communication according to the embodiments of the present disclosure can increase the data rate and the number of OFDMA transmission users, and greatly improve the utilization of 5 GHz and 6 GHz spectrum resources.

In addition, the 240 MHz channel bandwidth can also be constructed within 6 GHz, similar to the 240 MHz channel bandwidth constructed within 5 GHz in the embodiments of the present disclosure. The 240 MHz channel within 6 GHz may be formed by puncturing an 80 MHz subchannel from the standard 320MHz bandwidth.

FIG. 16 is a schematic structural diagram of a communication device 1600 according to some embodiments of the present disclosure. The communication device 1600 includes a processor 1610, and the processor 1610, when calling, loading, and running one or more computer programs from a memory, causes the communication device 1600 to perform the method according to the embodiments of the present disclosure.

In some embodiments, the communication device 1600 further includes a memory 1620. The processor 1610, when calling, loading, and running one or more computer programs from the memory 1620, causes the communication device 1600 to perform the method according to the embodiments of the present disclosure.

The memory 1620 is a separate device independent of the processor 1610 or is integrated in the processor 1610.

In some embodiments, the communication device 1600 further includes a transceiver 1630, and the processor 1610 controls communication of the transceiver 1630 and other devices. Specifically, the transceiver 1630 transmits information or data to other devices, or receives information or data from other devices.

The transceiver 1630 includes a transmitter and a receiver. The transceiver 1630 further includes one or more antennas.

In some embodiments, the communication device 1600 is the station in the embodiments of the present disclosure, and performs corresponding processes performed the station in various methods in the embodiments of the present disclosure, which is not repeated herein for brevity.

FIG. 17 is a schematic structural diagram of a chip 1700 according to some embodiments of the present disclosure. The chip 1700 includes a processor 1710, and the processor 1710, when calling, loading, and running one or more computer programs from a memory, causes the chip 1700 to perform the method according to the embodiments of the present disclosure.

In some embodiments, the chip 1700 further includes a memory 1720. The processor 1710, when calling, loading, and running one or more computer programs from the memory 1720, causes the chip 1700 to perform the method according to the embodiments of the present disclosure.

The memory 1720 is a separate device dependent from the processor 1710 or is integrated in the processor 1710.

In some embodiments, the chip 1700 further includes an input interface 1730, and the processor 1710 controls communication of the input interface 1730 and other devices or chips. Specifically, the input interface 1730 acquires information or data from other devices or chips.

In some embodiments, the chip 1700 further includes an output interface 1740, and the processor 1710 controls communication of the output interface 1740 and other devices or chips. Specifically, the output interface 1740 outputs information or data to other devices or chips.

In some embodiments, the chip 1700 is applicable to the station in the embodiments of the present disclosure, and achieves corresponding processes achieved by the station in various methods in the embodiments of the present disclosure, which is not repeated herein for brevity.

It should be understood that the chip according to the embodiments of the present disclosure is also referred to as a system-level chip, a system chip, a chip system, a system-on-chip, and the like.

The above processor is a general processor, a digital signal processor (DSP), a field-programmable gate array (FPGA), an ASIC, another programmable logic device, a transistor logic device, a discrete hardware assembly, and the like. The above general processor is a microprocessor or any conventional processor.

The above memory is a volatile or non-volatile memory, or may include both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory may be a random-access memory (RAM).

It should be understood that the above memory is illustrative but not restrictive. For example, the memory in the embodiments of the present disclosure is a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and the like. That is, the memory in the embodiments of the present disclosure is intended to include but not limit these and any other suitable types of memory.

FIG. 18 is a schematic block diagram of a communication system 1800 according to some embodiments of the present disclosure. The communication system 1800 includes a first station 1810 and a second station 1820.

The first station 1810 is configured to achieve corresponding functions achieved by the non-AP station, and the second station 1820 is configured to achieve corresponding functions achieved by the AP station, which are not repeated herein for brevity.

All or part of the above embodiments may be practiced by software, hardware, firmware, or any combination thereof. When practiced by the software, all or part of the above embodiments are practiced in the form of a computer program product. The computer program product includes one or more computer instructions. When the one or more computer program instruction are loaded and executed on a computer, all or part of the processes or functions according to the embodiments of the present disclosure are achieved. The computer is a general computer, a special-purpose computer, a computer network, or other programmable devices. The computer instructions are stored in a computer-readable storage medium or are transmitted from a computer-readable storage medium to another computer-readable storage medium. For example, the computer instructions are transmitted from a web site, a computer, a server, or a data center to another website, another computer, another server, or another data center by a wired mode (for example, a coaxial cable, an optical fiber, a digital subscriber line (DSL) or a wireless mode (for example, infrared, wireless, microwave, and the like) transmission. The computer-readable storage medium is any available medium that the computer can access or a data storage device, for example, a server, a data center, which contains one or more integrated available mediums. The available medium is a magnetic medium (for example, a floppy disk, a hard disk, a tape), an optical medium (for example, a DVD), or a semiconductor medium (for example, a solid state disk (SSD)).

It should be understood that in the embodiments of the present disclosure, the serial number of the processes described herein imply the sequence of performing the processes, and the sequence of performing the processes is determined based on the functions and internal logics, and shall not constitute any limitation on the implementation process of the embodiments of the present disclosure.

Those skilled in the art may clearly understand that, for the operating processes of the system, the device, and the unit described above, reference may be made to corresponding process in the above method embodiments, which are not repeated herein for convenience and simplicity of description.

Described above are merely specific embodiments of the present disclosure, and the scope of protection of the present disclosure is not intended to this. Any modifications, equivalent replacements, improvements and the like made within the spirit and principles of the present disclosure by those skilled in the art should be encompassed within the scope of protection of the present disclosure. Thus, the scope of protection of the present disclosure follows the scope of the protection of the attached claims.

**Claims**

1. A communication method, comprising:
   acquiring, by a station, first information, wherein the first information indicates bandwidth-related information of a first channel.

2. The method according to claim 1, wherein the bandwidth-related information of the first channel comprises information indicating that a bandwidth of the first channel is greater than a predetermined bandwidth of a subchannel.

3. The method according to claim 1 or 2, wherein the bandwidth-related information of the first channel comprises at least one of a starting frequency, a bandwidth of a subchannel, or a channel center frequency index of a subchannel.

4. The method according to any one of claims 1 to 3, wherein the bandwidth-related information of the first channel comprises an operating class corresponding to the first channel, wherein the operating class corresponding to the first channel indicates at least one of the bandwidth of the first channel, a starting frequency of the first channel, or a channel center frequency index of the first channel.

5. The method according to claim 4, wherein the operating class corresponding to the first channel comprises at least one of:

   a first operating class, defining that the first channel is a channel with a bandwidth of 240 MHz within a 5 GHz frequency band, the starting frequency of the first channel is 5 GHz, and the channel center frequency index of the first channel is 122;
   a second operating class, defining that the first channel is a channel with a bandwidth of 480 MHz within a 6 GHz frequency band, the starting frequency of the first channel is 5.950 GHz, and the channel center frequency index of the first channel is 47, 79, 143, or 175; or
   a third operating class, defining that the first channel is a channel with a bandwidth of 640 MHz within a 6 GHz frequency band, the starting frequency of the first channel is 5.950 GHz, and the channel center frequency index of the first channel is 63 or 159.

6. The method according to claim 4 or 5, wherein the operating class corresponding to the first channel is indicated in a first medium access control (MAC) frame and/or an Operating Class field in a first MAC element.

7. The method according to claim 6, wherein the Operating Class field indicates at least one of a channel starting frequency, a channel spacing, or the channel center frequency index.

8. The method according to any one of claims 1 to 7, wherein the bandwidth-related information of the first channel comprises a bandwidth support capability of the station.

9. The method according to claim 8, wherein the bandwidth support capability of the station comprises whether the station supports a physical layer protocol data unit (PPDU) related to the bandwidth of the first channel when operating in a first frequency band.

10. The method according to claim 9, wherein the bandwidth support capability of the station comprises at least one of:

   whether to support a non-orthogonal frequency division multiple access (non-OFDMA) 240 MHz PPDU when operating in a 5 GHz frequency band;
   whether to support a non-OFDMA 480 MHz PPDU when operating in a 6 GHz frequency band; or
   whether to support a non-OFDMA 640 MHz PPDU when operating in a 6 GHz frequency band.

11. The method according to any one of claims 8 to 10, wherein the bandwidth support capability of the station is indicated in an Ultra-high Reliability (UHR) Physical Layer (PHY) Capabilities Information field in a UHR Capabilities element.

12. The method according to claim 11, wherein the UHR Capabilities element is a second medium access control (MAC) element and/or in a second MAC frame.

13. The method according to any one of claims 1 to 12, wherein the bandwidth-related information of the first channel comprises configuration information of the first channel in a basic service set (BSS) of the station.

14. The method according to claim 13, wherein the configuration information of the first channel comprises a field indicating the bandwidth and a field indicating a channel center frequency index.

15. The method according to claim 14, wherein the field indicating the channel center frequency index is a Channel Center Frequency Segment (CCFS) field, wherein the CCFS field comprises a first CCFS subfield and a second CCFS subfield, wherein the first CCFS subfield indicates a channel center frequency index of a primary channel in the first channel, and the second CCFS subfield indicates a channel center frequency index of the first channel.

16. The method according to claim 14, wherein the field indicating the channel center frequency index is a Channel Center Frequency Segment (CCFS) field, wherein the CCFS field comprises a third CCFS subfield, wherein the third CCFS subfield indicates a channel center frequency index of the first channel in the BSS.

17. The method according to any one of claims 1 to 13, wherein the configuration information of the first channel is indicated in an Ultra-high Reliability (UHR) Operation Information field in a UHR Operation element.

18. The method according to claim 17, wherein the UHR Operation element is carried in at least one of a beacon frame, a probe response frame, an association response frame, or a reassociation response frame.

19. The method according to any one of claims 1 to 18, wherein the first channel comprises N adjacent second channels, N being an integer greater than 1; and the bandwidth of the first channel is equal to a sum of bandwidths of the N adjacent second channels.

20. The method according to claim 19, wherein the first channel is a 240 MHz channel, the 240 MHz channel being a channel with a bandwidth of 240 MHz within a 5 GHz frequency band; and the first channel comprises three adjacent second channel, each of the three adjacent second channels being a channel with a bandwidth of 80 MHz within the 5 GHz frequency band.

21. The method according to claim 19, wherein the first channel is a 480 MHz channel, the 480 MHz channel being a channel with a bandwidth of 480 MHz within a 6 GHz frequency band; and the first channel comprises three adjacent second channels, each of the three adjacent second channel being a channel with a bandwidth of 160 MHz within the 6 GHz frequency band.

22. The method according to claim 19, wherein the first channel is a 640 MHz channel, the 640 MHz channel is a channel with a bandwidth of 640 MHz within a 6 GHz frequency band; and the first channel comprises four adjacent second channels, each of the four adjacent second channel is a channel with a bandwidth of 160 MHz within the 6 GHz frequency band.

23. The method according to any one of claims 19 to 22, wherein subchannels of the first channel comprise a first subchannel and at least one second subchannel, wherein the first subchannel is a primary channel, and each of the at least one second subchannel is a secondary channel.

24. The method according to claim 23, wherein the first channel is a 240 MHz channel, the first subchannel is a primary 80 MHz channel, and two second subchannels in the first channel are a first secondary 80 MHz channel and a second secondary 80 MHz channel, wherein the primary 80 MHz channel comprises a primary 20 MHz channel.

25. The method according to claim 23, wherein the first channel is a 240 MHz channel, the first subchannel is a primary 160 MHz channel, and each of the at least one second subchannel is a secondary 80 MHz channel, wherein the primary 160 MHz channel comprises a primary 20 MHz channel.

26. The method according to claim 25, wherein a channel center frequency index of the primary 20 MHz channel is 100, 104, 108, 112, 116, 120, or 128.

27. The method according to claim 23, wherein the first channel is a 480 MHz channel, the first subchannel is a primary 320 MHz channel, and two second subchannels in the first channel are a first secondary 80 MHz channel and a second secondary 80 MHz channel, wherein the primary 320 MHz channel comprises a primary 20 MHz channel.

28. The method according to claim 27, wherein the first channel is a first 480 MHz channel, a channel center frequency index of the first 480 MHz channel being 47 or 143; or, the first channel is a second 480 MHz channel, a channel center frequency index of the second 480 MHz channel being 79 or 175.

29. The method according to claim 23, wherein the first channel is a 640 MHz channel, the first subchannel is a primary 320 MHz channel, and each of the at least one second subchannel is a secondary 320 MHz channel, wherein the primary 320 MHz channel comprises a primary 20 MHz channel.

30. The method according to claim 29, wherein the first channel is a first 640 MHz channel, a channel center frequency index of the first 640 MHz channel being 63; or, the first channel is a second 640 MHz channel, a channel center frequency index of the second 640 MHz channel being 159.

31. The method according to any one of claims 24 to 29, wherein a channel center frequency index of the primary 20 MHz channel is determined based on a channel center frequency index of the first channel, a number of 20 MHz channels in the first channel, and a location of the primary 20 MHz channel, wherein the location of the primary 20 MHz channel corresponds to the location of the primary 20 MHz channel of the channel center frequency index and the bandwidth of the first channel.

32. The method according to any one of claims 23 to 31, wherein

a channel center frequency index of the first subchannel in the first channel is determined based on a starting frequency of the first channel, a channel center frequency index of the first channel, a number of 20 MHz channels in the first channel, and a location of the primary 20 MHz channel, wherein the location of the primary 20 MHz channel corresponds to the channel center frequency index and the bandwidth of the first channel; and
a channel center frequency index of each of the at least one second subchannel in the first channel is determined based on the starting frequency of the first channel and the channel center frequency index of the first channel.

33. A station, comprising:
a processing unit, configured to acquire first information, wherein the first information indicates bandwidth-related information of a first channel.

34. The station according to claim 1, wherein the bandwidth-related information of the first channel comprises information indicating that the bandwidth of the first channel is greater than a predetermined bandwidth.

35. The station according to claim 33 or 34, wherein the bandwidth-related information of the first channel comprises at least one of a starting frequency, a bandwidth of a subchannel, or a channel center frequency index of a subchannel.

36. The station according to any one of claims 33 to 35, wherein the bandwidth-related information of the first channel comprises an operating class corresponding to the first channel, wherein the operating class corresponding to the first channel indicates at least one of the bandwidth of the first channel, a starting frequency of the first channel, or a channel center frequency index of the first channel.

37. The station according to claim 36, wherein the operating class corresponding to the first channel comprises at least one of:

a first operating class, defining that the first channel is a channel with a bandwidth of 240 MHz within a 5 GHz frequency band, the starting frequency of the first channel is 5 GHz, and the channel center frequency index of the first channel is 122;
a second operating class, defining that the first channel is a channel with a bandwidth of 480 MHz within a 6 GHz frequency band, the starting frequency of the first channel is 5.950 GHz, and the channel center frequency index of the first channel is 47, 79, 143, or 175; or
a third operating class, defining that the first channel is a channel with a bandwidth of 640 MHz within a 6 GHz frequency band, the starting frequency of the first channel is 5.950 GHz, and the channel center frequency index of the first channel is 63 or 159.

38. The station according to claim 36 or 37, wherein the operating class corresponding to the first channel is indicated in a first medium access control (MAC) frame and/or an Operating Class field in a first MAC element.

39. The station according to claim 38, wherein the Operating Class field indicates at least one of a channel starting frequency, a channel spacing, or the channel center frequency index.

40. The station according to any one of claims 33 to 39, wherein the bandwidth-related information of the first channel comprises a bandwidth support capability of the station.

41. The station according to claim 40, wherein the bandwidth support capability of the station comprises whether the station supports a physical layer protocol data unit (PPDU) related to the bandwidth of the first channel when operating in a first frequency band.

42. The station according to claim 40, wherein the bandwidth support capability of the station comprises at least one of:

whether to support a non-orthogonal frequency division multiple access (non-OFDMA) 240 MHz PPDU when operating in a 5 GHz frequency band;
whether to support a non-OFDMA 480 MHz PPDU when operating in a 6 GHz frequency band; or
whether to support a non-OFDMA 640 MHz PPDU when operating in a 6 GHz frequency band.

43. The station according to any one of claims 40 to 42, wherein the bandwidth support capability of the station is indicated in an Ultra-high Reliability (UHR) Physical Layer (PHY) Capabilities Information field in a UHR Capabilities element.

44. The station according to claim 43, wherein the UHR Capabilities element is a second medium access control (MAC) element and/or in a second MAC frame.

45. The station according to any one of claims 33 to 44, wherein the bandwidth-related information of the first channel comprises configuration information of the first channel in a basic service set (BSS) of the station.

46. The station according to claim 45, wherein the configuration information of the first channel comprises a field indicating the bandwidth and a field indicating a channel center frequency index.

47. The station according to claim 46, wherein the field indicating the channel center frequency index is a Channel Center Frequency Segment (CCFS) field, wherein the CCFS field comprises a first CCFS subfield and a second CCFS subfield, wherein the first CCFS subfield indicates a channel center frequency index of a primary channel in the first channel, and the second CCFS subfield indicates a channel center frequency index of the first channel.

48. The station according to claim 46, wherein the field indicating the channel center frequency index is a Channel Center Frequency Segment (CCFS) field, wherein the CCFS field comprises a third CCFS subfield, wherein the third CCFS subfield indicates a channel center frequency index of the first channel in the BSS.

49. The station according to any one of claims 33 to 45, wherein the configuration information of the first channel is indicated in an Ultra-high Reliability (UHR) Operation Information field in a UHR Operation element.

50. The station according to claim 49, wherein the UHR Operation element is carried in at least one of a beacon frame, a probe response frame, an association response frame, or a reassociation response frame.

51. The station according to any one of claims 33 to 50, wherein the first channel comprises N adjacent second channels, N being an integer greater than 1; and the bandwidth of the first channel is equal to a sum of bandwidths of the N adjacent second channels.

52. The station according to claim 51, wherein the first channel is a 240 MHz channel, the 240 MHz channel being a channel with a bandwidth of 240 MHz within a 5 GHz frequency band; and the first channel comprises three adjacent second channel, each of the three adjacent second channels being a channel with a bandwidth of 80 MHz within the 5 GHz frequency band.

53. The station according to claim 51, wherein the first channel is a 480 MHz channel, the 480 MHz channel being a channel with a bandwidth of 480 MHz within a 6 GHz frequency band; and the first channel comprises three adjacent second channels, each of the three adjacent second channel being a channel with a bandwidth of 160 MHz within the 6 GHz frequency band.

54. The station according to claim 51, wherein the first channel is a 640 MHz channel, the 640 MHz channel is a channel with a bandwidth of 640 MHz within a 6 GHz frequency band; and the first channel comprises four adjacent second channels, each of the four adjacent second channel is a channel with a bandwidth of 160 MHz within the 6 GHz frequency band.

55. The station according to any one of claims 51 to 54, wherein subchannels of the first channel comprise a first subchannel and at least one second subchannel, wherein the first subchannel is a primary channel, and each of the at least one second subchannel is a secondary channel.

56. The station according to claim 55, wherein the first channel is a 240 MHz channel, the first subchannel is a primary 80 MHz channel, and two second subchannels in the first channel are a first secondary 80 MHz channel and a second secondary 80 MHz channel, wherein the primary 80 MHz channel comprises a primary 20 MHz channel.

57. The station according to claim 55, wherein the first channel is a 240 MHz channel, the first subchannel is a primary 160 MHz channel, and each of the at least one second subchannel is a secondary 80 MHz channel, wherein the primary 160 MHz channel comprises a primary 20 MHz channel.

58. The station according to claim 57, wherein a channel center frequency index of the primary 20 MHz channel is 100, 104, 108, 112, 116, 120, or 128.

59. The station according to claim 55, wherein the first channel is a 480 MHz channel, the first subchannel is a primary 320 MHz channel, and two second subchannels in the first channel are a first secondary 80 MHz channel and a second secondary 80 MHz channel, wherein the primary 320 MHz channel comprises a primary 20 MHz channel.

60. The station according to claim 59, wherein the first channel is a first 480 MHz channel, a channel center frequency index of the first 480 MHz channel being 47 or 143; or, the first channel is a second 480 MHz channel, a channel center frequency index of the second 480 MHz channel being 79 or 175.

61. The station according to claim 55, wherein the first channel is a 640 MHz channel, the first subchannel is a primary 320 MHz channel, and each of the at least one second subchannel is a secondary 320 MHz channel, wherein the primary 320 MHz channel comprises a primary 20 MHz channel.

62. The station according to claim 61, wherein the first channel is a first 640 MHz channel, a channel center frequency index of the first 640 MHz channel being 63; or, the first channel is a second 640 MHz channel, a channel center frequency index of the second 640 MHz channel being 159.

63. The station according to any one of claims 56 to 61, wherein a channel center frequency index of the primary 20 MHz channel is determined based on a channel center frequency index of the first channel, a number of 20 MHz channels in the first channel, and a location of the primary 20 MHz channel, wherein the location of the primary 20 MHz channel corresponds to the channel center frequency index and the bandwidth of the first channel.

64. The station according to any one of claims 55 to 63, wherein

a channel center frequency index of the first subchannel in the first channel is determined based on a starting frequency of the first channel, a channel center frequency index of the first channel, a number of 20 MHz channels in the first channel, and a location of the primary 20 MHz channel, wherein the location of the primary 20 MHz channel corresponds to the channel center frequency index and the bandwidth of the first channel; and
a channel center frequency index of each of the at least one second subchannel in the first channel is determined based on the starting frequency of the first channel and the channel center frequency index of the first channel.

65. A communication device, comprising: a processor and a memory storing one or more computer programs, wherein the one or more computer programs, when called, loaded, and run by the processor, cause the communication device to perform the method as defined in any one of claims 1 to 32.

66. A chip, comprising: a processor, wherein the processor, when calling one or more computer programs from a memory, and loading and running the one or more computer programs, causes a device equipped with the chip to perform the method as defined in any one of claims 1 to 32.

67. A computer-readable storage medium, storing one or more computer programs therein, wherein the one or more computer programs, when loaded and run by a device, cause the device to perform the method as defined in any one of claims 1 to 32.

68. A computer program product, comprising: one or more computer program instructions, wherein the one or more computer program instructions, when loaded and executed by a computer, cause the computer to perform the method as defined in any one of claims 1 to 32.

69. A computer program, wherein the computer program causes a computer to perform the method as defined in any one of claims 1 to 32.

**100**

110

120          120

FIG. 1

Secondary 20MHz

Primary 20MHz

Primary 20MHz | Secondary 20MHz

Primary 40MHz ↔ Secondary 40MHz

Primary 80MHz ↔ Secondary 80MHz

Primary 160MHz ↔ Secondary 160MHz

320MHz

FIG. 2

<u>300</u>

Acquiring, by a station, first information, wherein the first information indicates bandwidth-related information of a first channel ⟶ S310

FIG. 3

Station 400

Receiving unit 410

FIG. 4

Channel center frequency index

5250MHz          5725MHz     5825MHz

UNII-1          UNII-2          UNII-3     NEW          Other standard bandwidth   Newly added bandwidth

20MHz  36 40 44 48 52 56 60 64     100 104 108 112 116 120 124 128 132 136 140 144   149 153 157 161 165 169 173 177

40MHz  38 46 54 62     102 110 118 126 134 142

80MHz  42 58     106 122 138

160MHz  50     114

240MHz  122     5735MHz     5895MHz

5490MHz     5730MHz

FIG. 5

Primary 20MHz

Primary 80MHz (P80)  Secondary 1 80MHz  Secondary 2 80MHz
(S1-80)  (S2-80)

FIG. 6

Primary
20MHz

Primary 160MHz (P160)  Secondary 1 80MHz
(S1-80)

FIG. 7

Channel center
frequency index
7  23  39  55  71  87  103  119  135  151  167  183  199  215
80MHz

Other  Newly
standard  added
bandwidth  bandwidth

15  47  79  111  143  175  207
160MHz

31  95  159
320MHz-1

63  127  191
320MHz-2

47  143
480MHz-1

79  175
480MHz-2

FIG. 8

Primary 20MHz

Primary 320MHz  Secondary 1  Secondary 2
(P320)  80MHz (S1-80)  80MHz (S2-80)

FIG. 9

FIG. 10

FIG. 11

| Element ID | Length | Element ID Extension | UHR PHY Capabilities Information |
|---|---|---|---|

Octets:        1              1              1

FIG. 12

| Element ID | Length | Element ID Extension | UHR Operation Information |
|---|---|---|---|

Octets:        1              1              1

FIG. 13

Octets:        1              1              1          0 or 4

| Control | CCFS0 | CCFS1 | Disabled Subchannel Bitmap |
|---|---|---|---|

B0            B3  B4                  B7

| Channel Width | Reserved |
|---|---|

Bits:              3                    5

FIG. 14

Octets:   1               1               0 or 4

| Control | CCFS0 | Disabled Subchannel Bitmap |
|---------|-------|---------------------------|

B0                          B3  B4                          B7

| Channel Width | Reserved |
|---------------|----------|

Bits:          3               5

FIG. 15

Communication device
1600

| Memory 1620 | Processor 1610 |
|-------------|----------------|

Transceiver
1630

FIG. 16

Chip 1700

Input interface 1730

Processor 1710

Memory 1720

Output interface 1740

FIG. 17

Communication system 1800

| First station | 1810 | Second station | 1820 |
|---------------|------|----------------|------|

FIG. 18

## INTERNATIONAL SEARCH REPORT

International application No.

**PCT/CN2022/108759**

| A. | CLASSIFICATION OF SUBJECT MATTER |
|---|---|
| | H04W 72/04(2009.01)i;  H04W 4/70(2018.01)i;  H04W 84/12(2009.01)i |

According to International Patent Classification (IPC) or to both national classification and IPC

| B. | FIELDS SEARCHED |
|---|---|

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 站点, 通信, 信道, 带宽, 指示, station, communication, channel, bandwidth, indication

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020242109 A1 (LG ELECTRONICS INC.) 03 December 2020 (2020-12-03)<br>description, paragraphs 58-431, and figure 17 | 1-69 |
| X | CN 110769467 A (HUAWEI TECHNOLOGIES CO., LTD.) 07 February 2020 (2020-02-07)<br>description, paragraphs 5-172 | 1-69 |
| X | US 2021321388 A1 (NXP USA, INC.) 14 October 2021 (2021-10-14)<br>description, paragraphs 17-114 | 1-69 |
| X | CN 113543227 A (HUAWEI TECHNOLOGIES CO., LTD.) 22 October 2021 (2021-10-22)<br>description, paragraphs 8-105 | 1-69 |
| X | US 11382101 B1 (MARVELL ASIA PTE LTD.) 05 July 2022 (2022-07-05)<br>description, paragraphs 23-166 | 1-69 |
| X | CN 111213428 A (QUALCOMM INC.) 29 May 2020 (2020-05-29)<br>description, paragraphs 7-32 | 1-69 |
| X | CN 111162885 A (HUAWEI TECHNOLOGIES CO., LTD.) 15 May 2020 (2020-05-15)<br>description, paragraphs 8-123 | 1-69 |

☐ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **30 November 2022** | **16 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/108759**

| Patent document cited in search report | | | Publication date (day/month/year) | Patent family member(s) | | | Publication date (day/month/year) |
|---|---|---|---|---|---|---|---|
| WO | 2020242109 | A1 | 03 December 2020 | US | 2022239451 | A1 | 28 July 2022 |
| CN | 110769467 | A | 07 February 2020 | WO | 2020024883 | A1 | 06 February 2020 |
| | | | | US | 2021153210 | A1 | 20 May 2021 |
| US | 2021321388 | A1 | 14 October 2021 | | None | | |
| CN | 113543227 | A | 22 October 2021 | WO | 2021208591 | A1 | 21 October 2021 |
| US | 11382101 | B1 | 05 July 2022 | | None | | |
| CN | 111213428 | A | 29 May 2020 | US | 2019116545 | A1 | 18 April 2019 |
| | | | | WO | 2019079197 | A1 | 25 April 2019 |
| | | | | TW | 201924372 | A | 16 June 2019 |
| CN | 111162885 | A | 15 May 2020 | WO | 2020094092 | A1 | 14 May 2020 |
| | | | | EP | 3866373 | A1 | 18 August 2021 |
| | | | | US | 2021266904 | A1 | 26 August 2021 |

Form PCT/ISA/210 (patent family annex) (January 2015)